(19) Europäisches Patentamt
European Patent Office
Office européen des brevets

(11) EP 0 730 618 B1

(12) EUROPEAN PATENT SPECIFICATION

(45) Date of publication and mention of the grant of the patent:
**01.12.1999 Bulletin 1999/48**

(21) Application number: **94927269.4**

(22) Date of filing: **30.08.1994**

(51) Int Cl.[6]: **C08J 3/03**, C08L 33/26, B01F 3/00, C02F 1/52

(86) International application number:
**PCT/US94/09751**

(87) International publication number:
**WO 95/14728 (01.06.1995 Gazette 1995/23)**

# (54) MULTIMODAL EMULSIONS AND PROCESSES FOR PREPARING MULTIMODAL EMULSIONS

MULTIMODALE EMULSIONEN UND VERFAHREN ZUR HERSTELLUNG MULTIMODALER EMULSIONEN

EMULSIONS MULTIMODALES ET PROCEDES POUR PREPARER DE TELLES EMULSIONS

(84) Designated Contracting States:
**AT BE CH DE DK ES FR GB GR IE IT LI LU NL PT SE**

(30) Priority: **24.11.1993 US 157764**
**24.11.1993 US 157795**

(43) Date of publication of application:
**11.09.1996 Bulletin 1996/37**

(73) Proprietor: **CYTEC TECHNOLOGY CORP.**
**Wilmington, Delaware 19801 (US)**

(72) Inventors:
- **CHEN, Haunn-Lin**
  **Darien, CT 06820 (US)**
- **CICCHIELLO, James, V.**
  **Rye Brook, NY 10573 (US)**
- **HUANG, Sun-Yi**
  **Stamford, CT 06903 (US)**
- **KOZAKIEWICZ, Joseph, J.**
  **Trumbull, CT 06612 (US)**
- **RICE, Richard, F.**
  **Stamford, CT 06902 (US)**
- **ROSATI, Louis**
  **South Salem, NY 10590 (US)**
- **WATERMAN, Paul, S.**
  **Shelton, CT 06484 (US)**

(74) Representative: **Allam, Peter Clerk et al**
**LLOYD WISE, TREGEAR & CO.,**
**Commonwealth House,**
**1-19 New Oxford Street**
**London WC1A 1LW (GB)**

(56) References cited:
**EP-A- 0 041 125**
**EP-A- 0 049 819**
**EP-A- 0 130 632**
**EP-A- 0 327 321**
**US-A- 4 956 399**

Remarks:
The file contains technical information submitted after the application was filed and not included in this specification

EP 0 730 618 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to multimodal emulsions and processes for preparing multimodal emulsions comprising at least one microemulsion. Another aspect of the subject invention relates to stabilized blends of at least one microemulsion and at least one second emulsion.

The products of this invention are useful for flocculating suspended solids in an aqueous dispersion.

Emulsions have been desirable vehicles for the manufacture and transportating of synthetic polymeric flocculants, particularly high molecular weight polymers. Among other reasons for their popularity, emulsion polymers can be prepared with higher polymer solids and provide substantial cost savings over previous solution polymers. Microemulsions, as taught in U.S. Patent Nos. 4,956,399; 4,956,400; 5,037,863; 5,132,023 and 5,037,881, provide additional advantages with respect to polymers exhibiting undesirable characteristics even in the context of emulsions, for example Mannich (alk)acrylamide polymeric flocculating agents, by providing for high solids level, reduced debilitating crosslinking and superior performance. Though many polymers are commercially available in powder form, powder creates dust problems and the process of dissolving the dry solids, in aqueous medium, is a time-consuming step.

Despite the aforesaid advantages of using emulsion polymers over solution and powder polymers, as a practical matter, emulsions and microemulsions are not universally used because they can exhibit stability problems, settling tendencies and high bulk viscosity which can make handling difficult and costly. These problems were purportedly mitigated in U.S. Patent Nos. 4,619,967 and 4,565,836 which disclose inverse emulsions containing a single water-soluble polymer in an aqueous phase having two distinct aqueous droplet size distributions. The process in which the patentees teach to prepare these stable emulsions, however, involves an arduous series of steps of applying different shear rates to particular portions of the emulsion to produce two different aqueous droplet size distributions.

The inventors of the instant invention have surprisingly discovered a much simpler, more efficient process for making stable inverse emulsions having two or more different aqueous droplet size distributions or modes. In addition to providing a bimodal or multimodal emulsion having high solids with low bulk viscosity and, with certain polymers, superior flocculation performance, the process of the present invention provides for manufacture simplification and flexibility, allows for greater control over the dispersed phase or aqueous droplet sizes and can be used to prepare emulsion blends containing two or more different polymers. This last advantage is particularly important in view of the known benefits of combining two different water-soluble polymers for water treatment applications.

Japanese patent nos. 20-09500 discloses the mixing of an inverse emulsion containing a cationic polymer and an inverse emulsion containing an anionic polymer. The resulting emulsion mixtures are described as providing improvements in flocculation performance and benefits in paper making, respectively. But there is no teaching to mix two or more different types of emulsions, one of which is a microemulsion, to produce the desired multimodal emulsion having lower bulk viscosity and higher solids as achieved by the instant invention.

In U.S. Patent No. 5,213,693 the performance and handling benefits of simultaneously treating waste water with a cationic coagulant polymer and a cationic flocculant polymer are described. There, a particulate mixture containing coagulant polymer beads and flocculant polymer beads is used to facilitate dewatering of a sludge suspension. The beads generally range from about 70 to 1000 microns in size and are made by reverse phase suspension polymerization followed by drying and recovering the dry beads from the liquid. While the patentee mentions that the particulate composition can be a reverse phase emulsion, or more preferably, a reverse phase "substantially dry" dispersion containing the two polymers, there is no mention of using a microemulsion and no teaching to combine two or more inverse emulsions having polymer-containing aqueous phases which differ in their aqueous droplet size distribution. The aqueous droplets in the patentee's emulsions or dispersions are merely disclosed as ranging in size of up to 10 microns. No improvements in the physical properties of the emulsion are even suggested. In contrast, the process of the present invention blends at least two emulsions having aqueous droplet size distributions with different average droplet sizes, one of which results from a microemulsion. Apparently, the different droplet sizes in the microemulsion and second emulsion used in the process of this invention are retained in the resulting emulsion. These resulting bimodal and multimodal emulsions (collectively called "multimodal emulsions") exhibit lower viscosity. The smaller droplets from the microemulsion which are retained in the final multimodal emulsion are particularly beneficial for employing water-swellable or water-soluble polymers which tend to crosslink, such as the Mannich (alk)acrylamide polymers disclosed in, for example, U.S. 4,956,399; in such instances, the debilitating effects of large-scale crosslinking is minimized by the smaller droplets within the bimodal emulsion.

U.S. Patent No. 4,916,812 ('812 patent) discloses the blending of a water-in-oil emulsion containing a water soluble anionic polymer with a water-in-oil emulsion containing a water soluble cationic polymer to form an emulsion mixture which is used as an adhesive composition for wall covering. After the two emulsions are blended, the resulting emulsion is subject to high shear to create the desired particular size range of about from 2 to 5 microns. There is no teaching to blend two emulsions having distinctly different aqueous droplet size distributions, nor is it suggested that a microemulsion be used to prepare a multimodal emulsion. The emulsion mixtures produced according to the '812 patent do not provide the benefits of the present invention and the benefits of the present invention are not described

in the '812 patent.

As described in RubberWorld, 138, 877(1958), multimodal systems having at least two different particle size distributions were observed as providing reduced viscosity. Latices having average particle diameters of 950 Angstroms (Å), 1710 Å and 3250 A were concentrated alone and in various blend ratios of small, medium and large particles. These water-insoluble styrene-butadiene latices are, however, very different from the emulsion polymers of the present invention, having different applications and posing different problems and, having an aqueous continuous phase, they are not inverse emulsions.

Similarly, U.S. Patent No. 4,456,726 discloses a method for making a concentrated, bimodal synthetic resin dispersion which lacks structural viscosity. Such resins must be water insoluble under the conditions of preparation and use and the resin dispersions have an aqueous continuous phase; thus they are completely different from the polymers used in the present invention.

U.S. Patent No. 5,100,951 (the '951 patent) teaches that inverse emulsions containing high molecular weight cationic polymers can be combined with aqueous solutions of lower molecular weight cationic polymers. A different concept of producing the combination of polymers is disclosed in columns 9 and 10 of that patent, which involves emulsifying the solution polymer by adding oil and surfactant and applying intense mechanical agitation. The emulsified liquid polymer is then blended with a commercial emulsion polymer, which also requires intense mechanical agitation. Such intense agitation is not required in the present invention in order to produce a stable multimodal emulsion. The '951 patent also fails to suggest the blending of two or more emulsions having different droplet size distributions, such as a microemulsion and a macroemulsion. Bimodal emulsions are not disclosed on the '951 patent. The patentee in the '951 patent teaches to add additional oil and surfactants to the emulsion polymer before mixing the liquid polymer into the emulsion to achieve a stable blend. The use of additional oil and surfactants, which greatly increases costs, is also avoided in the process of the present invention.

In comparison to known methods, the multimodal emulsions of this invention provide a convenient, flexible process for preparing a low viscosity water-in-oil emulsion which comprises more than one type of polymer. For example, two polymers having two different ionic charges may be combined to attain a system having a desired intermediate charge. Accordingly, the inverse emulsions produced by the process of the instant invention are superior to emulsions in the art because they not only exhibit low bulk viscosity and high solids content, but they accommodate more than one type of polymer.

Another advantage of the present invention is that the properties of the multimodal emulsion blends can be easily adjusted by simply changing the particular ratios in which the polymeric microemulsion and second emulsion are mixed, or by changing the ratios of microemulsion polymer to the polymer in the second emulsion.. This is particularly desirable from a commercial standpoint because it allows for versatility in forming the particular bimodal or multimodal emulsion that is appropriate for treating a particular type of aqueous dispersion. One can, for example, tailor the ratio of the two emulsions that are blended to meet specific requirements and then simply mix the two emulsions accordingly to obtain the optimal bimodal emulsion; this is much simpler than processes used in the art.

In yet another aspect of the present invention, a stable composition comprising a blend of at least two emulsions and an aldehyde scavenger exhibits superior flocculation performance. These emulsion blends are prepared using a microemulsion comprising a water-soluble polymer-based polymer having functional groups which are capable of continually crosslinking. More preferably, the polymer in the microemulsion is a quaternary dimethyl aminomethyl (alk)acrylamide. The microemulsion is blended with a second emulsion, preferably a macroemulsion containing an (alk)acrylamide-based polymer which is preferably cationic.

EP-A- 610955, derived from U.S. Patent Application Serial No. 08/018,858, filed February 12, 1993 discloses quaternary dialkyl aminomethyl (Mannich) acrylamide polymeric (PAM) microemulsions treated with a formaldehyde scavenger under aqueous acidic conditions (pH ranging from about 3.6 to 4.8) and then heated to a temperature ranging from about 40 to 80°C for from about 3 to 20 hours. This heat treatment solved problems associated with inversion and aging. By rendering the polymers less dependent to pH and temperature, the heat treatment improved the performance and efficiency of the polymers as flocculating agents and extended the shelf life and stability of the quaternized Mannich PAM.

Consequently, when heat treated quaternized Mannich PAM microemulsions were blended with a second macroemulsion it was expected that the resulting multimodal emulsion would continue to exhibit the inversion and long term stability benefits exhibited by the heat treated quaternized Mannich PAM microemulsion. The combination of a stabilized quaternized Mannich PAM microemulsion with a stable polymeric macroemulsion, however, resulted in a low viscosity multimodal emulsion which, though initially stable, tended to deteriorate in performance over time. This problem confounded those who worked with multimodal emulsion blends made from quaternized Mannich PAM microemulsions and it contradicted teachings in the art. For example, Japanese patent application 63-218246 discloses a mixture of an anionic polymer emulsion with a cationic polymer emulsion to produce an amphoteric polymer emulsion. The cationic polymeric emulsion may contain, among many acrylamide-based polymers, a Mannich modification product. While no stabilizer is added and no pH adjustments are made, the resulting amphoteric polymer emulsion was

reported to exhibit "excellent stability over time". This result was not found, however, when certain polymer microemulsions such as Mannich (alk)acrylamide polymeric microemulsions were blended with emulsions comprising acrylamide-based polymers, as in the present invention.

Though the applicant is not to be bound by any scientific theory described herein, it has been deduced that, when an inverse microemulsion containing a functionalized polymer, preferably a quaternized Mannich PAM, is blended with a second emulsion, compounds such as aldehydes within the functionalized polymer-containing microemulsion, (e.g. a Mannich PAM microemulsion), surprisingly migrate to the aqueous phase of the second emulsion where they may react with the (alk)acrylamide-based polymer therein. The addition of an aldehyde scavenger to the emulsion blend has been found to provide for longer term stability. No heating or alkalinity adjustments are necessary for attaining a stable emulsion blend.

It is further surprising that the stable compositions of the present invention, which comprise a blend of at least two emulsions, may be prepared from a second emulsion containing an (alk)acrylamide-based polymer and a microemulsion containing a quaternary Mannich (alk)acrylamide which has not been previously heat treated with a formaldehyde scavenger under acid conditions and heating as taught in EP-A-610955. Instead, a blend of such two emulsions may be stabilized by the addition of a blend stabilizing amount of aldehyde scavenger according to the instant invention.

The use of functionalized polymers, as defined herein, in microemulsion form reduces, if not overcomes, problems of large scale debilitating cross-linking which is inherently observed when such functionalized polymers are in solution form or inverse macroemulsion form. Consequently, the functionalized polymers maintain superior performance as effective flocculants in dewatering suspended solids.

In this regard, the stable emulsions of the instant invention can exhibit superior performance in various flocculation applications in comparison to the singular use of either of the emulsions used to prepare the stable emulsion blend. Further, the stable emulsion blends having a cationic (or anionic) charge often perform better than similar polymeric microemulsions or macroemulsions in the art having the same charge.

In a first aspect, the present invention provides a process for preparing a multimodal polymeric emulsion which comprises:

(a) preparing a microemulsion comprising a continuous phase and a water-swellable or water-soluble polymer-containing discontinuous phase in the form of droplets having a volume average droplet diameter;

(b) preparing a second emulsion comprising a continuous phase and a water-swellable or water-soluble polymer-containing discontinuous phase in the form of droplets having a volume average diameter which is greater than the volume average diameter of the droplets in the microemulsion, the polymer in said second emulsion differing from that in said microemulsion; and

(c) admixing said microemulsion from step (a) and said second emulsion from step (b).

In another aspect, the present invention provides a composition comprising a blend of a microemulsion comprising a continuous phase and a water-swellable or water-soluble polymer-containing discontinuous phase in the form of droplets having a volume average droplet diameter; and a second emulsion comprising a continuous phase and a water-swellable or water-soluble polymer-containing discontinuous phase in the form of droplets having a volume average diameter which is greater than the volume average diameter of the droplets in the microemulsion, the polymer in said second emulsion differing from that in said microemulsion.

The composition of this invention in a preferred embodiment comprises a blend of a microemulsion comprising a continuous phase and a water-soluble polymer-containing discontinuous phase in the form of droplets having a volume average droplet diameter, said polymer in said microemulsion being a dialkyl aminomethyl (alk)acrylamide polymer or quaternary derivative thereof which contains from 60 to 90 mole percent cationic functionality; and a macroemulsion comprising a continuous phase and a water-swellable or water-soluble polymer containing discontinuous phase in the form of droplets having a volume average diameter which is at least 300 Å greater than the volume average diameter of the droplets in the microemulsion; said polymer in said macroemulsion being a copolymer of acrylamide and (meth)acryloylethyltrimethylammonium salt which contains from 1 to 20 mole percent cationic functionality.

In yet another aspect, the present invention provides a stable composition comprising a blend of first and second inverse emulsions wherein (a) said first emulsion is a microemulsion which contains in its discontinuous phase a functionalized water-swellable or water-soluble polymer, and (b) said second emulsion contains a water-swellable or water-soluble (alk)acrylamide-based polymer and an amount of aldehyde scavenger ranging from 0.1 to 10 weight percent, based on total weight of the composition, said functionalized polymer being an (alk)acrylamide-based polymer which contains, generates or is capable of generating a compound capable of reacting with the (alk)acrylamide-based polymer in the emulsion blend.

Yet further, there is provided a method of preparing a stable composition comprising a blend of first and second inverse emulsions which comprises:

(a) preparing a first inverse emulsion which is a microemulsion comprising a water-swellable or water-soluble functionalized polymer;
(b) preparing a second inverse emulsion which is an emulsion comprising a water-swellable or water-soluble (alk) acrylamide-based polymer;
(c) admixing said microemulsion and said second emulsion to form a blend of emulsions; and
(d) adding an amount of aldehyde scavenger compound ranging from 0.1 to 10 weight percent, based on the total weight of the composition, to the microemulsion, to the second emulsion or to the emulsion blend resulting from step (c), said functionalized polymer being an (alk)acrylamide-based polymer which contains, generates or is capable of generating a compound capable of reacting with the (alk)acrylamide-based polymer in the emulsion blend.

Also provided are various methods of flocculating suspended solids in an aqueous dispersion using the multimodal emulsions and stable emulsion blends of the present invention.

As already indicated, it has been discovered that an inverse microemulsion comprising a polymer-containing discontinuous phase in the form of droplets can be combined with a second inverse emulsion comprising a polymer-containing discontinuous phase in the form of droplets to form a multimodal inverse emulsion. The second emulsion can be a macroemulsion or a microemulsion, provided that the droplets in the second emulsion have a volume average diameter that is greater than the volume average diameter of the droplets in the microemulsion with which it is blended. The microemulsions and second emulsions referred to herein are inverse (water-in-oil) emulsions. It is observed that the different droplet sizes of the two emulsions are retained in the resulting emulsion such that at least two different droplet size distributions exist in the discontinuous aqueous phase of the final mixture. The two or more different droplet size distributions result in bimodal or multimodal emulsions (i.e. emulsions having two or more modes or droplet size distributions) which have been found to be superior to conventional emulsions inasmuch as they can accommodate substantially more polymer solids, can comprise more than one type of polymer and exhibit a viscosity which is generally lower than the expected average viscosities of the microemulsion(s) and second emulsion(s) blended to prepare the multimodal emulsion. In many cases, particularly when the viscosities of the microemulsion and second emulsion are somewhat similar, the viscosity of the multimodal emulsion blend will be lower than the viscosity of either the microemulsion or second emulsion used to prepare the multimodal emulsion.

Since the emulsion blends of this invention include more than one polymer, they may contain a wide variety of combinations of different water-swellable, preferably water-soluble polymers such as, for example, a high molecular weight polymer and a low molecular weight polymer, a cationic polymer and an anionic polymer or a highly charged cationic polymer combined with a lower charged cationic polymer to provide a polymeric emulsion with an intermediate charge. Any combination of different water-swellable or water-soluble polymers may be used in the microemulsions and second emulsions that are blended to produce the multimodal emulsions of this invention. The polymers in the microemulsion and second emulsions used in the present invention may differ in any way, including differing in charge, or in amount of comonomer or they may chemically differ, such as having different functional groups. Polymer combinations for use in the present invention include, but are not limited to, two or more different cationic polymers, two or more different anionic polymers, a cationic and anionic polymer, a cationic and nonionic polymer, an anionic and nonionic polymer, two or more different nonionic polymers and polymers that are normally incompatible when mixed as solution polymers. Amphoteric polymers may also be included.

The types of polymers suitable for inclusion in the microemulsion and second emulsions used in the process of the present invention broadly include any type of water-swellable or water-soluble polymer, as these terms are used in the art, including any cationic, anionic, nonionic or amphoteric polymer. Water-soluble polymers are clearly preferred. The polymers employed in the microemulsion and second emulsions used in the process of this invention are formed by emulsion polymerization of water-soluble ethylenically unsaturated monomer or blend of monomers.

Suitable water-soluble monomers for preparing the polymeric microemulsions and second emulsions which are blended to form a stable multimodal emulsion include those that will readily undergo addition polymerization. Preferred cationic monomers include dialkylaminoalkyl (meth)acrylates and dialkylaminoalkyl (meth) acrylamides, including their acid addition or quaternary ammonium salts, diallyl dialkyl ammonium halides, vinyl benzyltrialkyl ammonium salts, polymers formed by the reaction between an epihalohydrin or dihaloalkane and an amine, and the like. Quaternized Mannich or dialkyl amino methylated (alk)acrylamide polymers such as quaternary N-trimethylaminomethylacrylamide prepared by functionalizing (alk)acrylamide or poly(alk)acrylamide are particularly preferred. Specific examples of preferred cationic monomers include, N-dimethylaminomethyl acrylamide; acryloxyethyltrimethylammonium chloride; diallydimethylammonium chloride; 3-acrylamido-3-methyl butyl trimethyl ammonium chloride, 2-acrylamido-2-methyl propyl trimethyl ammonium chloride, 2-methacryloyloxyethyl trimethyl ammonium methosulfate, 2-methacryloyoxyethyl trimethyl ammonium chloride, 3-methacryloyl-2-hydroxy propyl trimethyl ammonium chloride, 3-acrylamidopropyldimethylamino-(3-trimethyl-2-hydroxylpropyl ammonium chloride), dimethylaminoethylacrylate, dimethylaminoethylmethacrylate or mixtures of any of the foregoing. Mixtures of any of the above cationic monomers together with acrylamide or (meth)acrylamide to prepare cationic copolymers are useful and also preferred for the present invention.

The instant invention also contemplates homopolymers of the above cationic monomers, as well as copolymers of any of the above cationic monomers, or anionic or nonionic monomers, listed below.

The preferred anionic monomers for use in preparing the microemulsions and/or second emulsions used in the present invention generally are vinyl anionic monomers and include acrylic acid, methacrylic acid, ethacrylic acid and their alkali metal or ammonium salts, vinyl sulfonic acid, 2-acrylamido-2-alkylsulfonic acids where the alkyl group contains 1 to 6 carbon atoms, such as acrylamido 2-methyl propanesulfonic acid or mixtures of any of the foregoing and their alkaline salts. The anionic monomers may be copolymerized with (alk)acrylamide, preferably acrylamide or methacrylamide. Acrylamide copolymers with salts of (meth)acrylic acid may also be prepared by hydrolysis of acrylamide, though attention should be directed to the use of a proper surfactant system capable of withstanding high pH conditions. Especially preferred anionic monomers include acrylic acid salts and 2-acrylamido-2-methyl propane sulfonic acid salts.

The preferred ethylenically unsaturated nonionic monomers for use in the preparation of the microemulsions and/or second emulsions used in the present invention are selected from acrylamide; methacrylamide; dialkylaminoethyl acrylamides; N,N-dialkylacrylamides; N-alkylacrylamides; N-vinyl-acetamide; N-vinyl formamide; N-vinyl pyrrolidone and mixtures thereof. Especially preferred is acrylamide and methacrylamide.

The preferred amphoteric polymers for use in the present invention comprise copolymers of one or more of the foregoing anionic monomers and one or more of the cationic ethylenically unsaturated monomers listed above or monomers which contain both anionic and cationic functionalities. Moreover, small amounts of hydrophobic comonomers can be included in the polymers employed in the microemulsions or second emulsions used in this invention such as styrene, methylmethacrylate, methylacrylates, (meth)acrylate esters containing 1-16 carbons, vinyl acetate and higher esters, acrylonitrile, vinyl chloride and the like. It is understood that the present invention is not limited to the description of monomers, comonomers, polymers and copolymers herein.

Preferred water-swellable or water-soluble polymers for inclusion in the microemulsions used to prepare the multimodal polymeric emulsions of the present invention are cationic polymers, more preferably cationic polymers containing monomeric units selected from quaternary dialkyl aminomethyl (alk)acrylamide; dialkyl aminomethyl (alk) acrylamide; quaternary dialkylaminoalkyl (meth)acrylates; dialkylaminoalkyl (meth)acrylates; quaternary dialkylaminoalkyl (meth)acrylamides; dialkylaminoalkyl (meth)acrylamides; diallyldialkylammonium halides and copolymers of acrylamide or methacrylamide with the foregoing monomeric units. These cationic polymeric microemulsions are preferably blended with a second emulsion, normally a macroemulsion, containing a cationic polymer containing monomeric units selected from quaternary dialkyl aminomethyl (alk)acrylamide; dialkyl aminomethyl (alk)acrylamide; quaternary dialkylaminoalkyl (meth)acrylamides; dialkylaminoalkyl (meth)acrylamides; quaternary dialkylaminoalkyl (meth) acrylates; dialkylaminoalkyl (meth) acrylates diallyldialkylammonium halides; and copolymers of acrylamide or methacrylamide with the foregoing monomeric units. The phrase "polymer containing monomeric units "used herein includes reaction products of two or more vinyl monomers as well as homopolymers that have been functionalized.

Generally, the preferred emulsion polymer combinations will vary according to the substrate to be treated and the application for which the multimodal emulsion is used. For example, for flocculating suspended solids in municipal sludge or paper sludge, it is preferred to combine a polymeric microemulsion comprising quaternary dialkyl aminomethyl (Mannich) polyacrylamide (PAM), with a cationic polymeric macroemulsion, preferably a macroemulsion comprising polymers made from (meth)acryloxyethyl trimethylammonium halide or copolymers of acrylamide and (meth)acryloxyethyl trimethylammonium halide to form a low viscosity bimodal emulsion. To treat a sludge from coal refuse it would be preferable to combine an anionic polymeric microemulsion with an anionic polymeric macroemulsion.

The ionic polymers used in the microemulsion and second emulsion may also differ in charge. For instance, the polymers can have a wide range of charge densities, from just a few mole percent cationic or anionic functionality up to 100 mole percent of cationic or anionic functionality based on the monomer. A cationic quaternary Mannich PAM contained within the microemulsion may, for example, be blended with a second emulsion, preferably a macroemulsion, containing an anionic (alk)acrylamide-based polymer.

The molecular weights of the polymers used in the microemulsion and second emulsion are not critical to the invention and can range from a few hundred thousand to over ten million. When a high molecular weight polymer and a low molecular weight polymer combination is desired however, it is preferred to employ the high molecular weight polymer in the microemulsion and the low molecular weight polymers in the second emulsion, particularly when the second emulsion is a macroemulsion. The art recognizes that for many flocculation applications for which the emulsion blends are useful, the activity of the polymers is affected by molecular weight.

To prepare the multimodal and stable emulsions according to the present invention, at least one polymeric microemulsion is blended with at least one second emulsion with just enough agitation to admix the emulsions in a reasonable time. Intense mechanical agitation or shear is not necessary. However, if intense mechanical agitation is used, that blending process does not fall outside the scope of the present invention provided that at least one of the emulsions used is a microemulsion.

In combining one or more microemulsions with at least one second emulsion the proportions in which the

emulsions are combined is not critical. Generally, at least one percent of a microemulsion should be combined with at least 1 percent of a second emulsion. Preferably, two or more emulsions may be combined in any proportions ranging from 99 to 1 parts microemulsion to second emulsion to 1 to 99 parts microemulsion to second emulsion; more preferably the ratio of microemulsion to second emulsion ranges from 95 to 5 parts microemulsion to second emulsion to 5 to 95 parts microemulsion to second emulsion. It is important that at least one of the emulsions to be blended is a microemulsion, which differs significantly from macroemulsions.

To attain a low viscosity multimodal emulsion, i.e., an emulsion having at least two different droplet size distributions as measured and compared using any method used in the art, e.g., by measuring number average droplet diameter or volume average droplet diameter, at least two different emulsions should be combined. The droplet size distribution in the multimodal emulsions of the present invention need not differ by any specific quantitative amount, though generally, the maxima of one or more droplet size distribution will differ by at least 150 Å, preferably at least 300 Å, more preferably at least 1000 Å and most preferably at least 2000 Å as measured by volume average droplet diameter. To obtain a multimodal emulsion, however, one must combine two or more emulsions having different droplet sizes. More specifically, the microemulsion droplet size distribution, as represented by its volume average droplet size, must differ from that of the second emulsion. Volume average droplet diameter will be used herein to distinguish microemulsions from the second emulsions with which they are blended. While there are many known methods of determining the volume average diameter, as the term is used herein, volume average droplet diameter is a value obtained by transmission electron microscopy using the following equation, as applied to a count of droplets which is sufficient to attain an accurate statistical representation of the droplet size distribution:

$$V_a = \sqrt[3]{\frac{\sum X_i^3}{\sum N_i}}$$

Wherein:

$X_i$ = the diameter value

$N_i$ = the number of droplets of each diameter value

$V_a$ = volume average droplet diameter

In practicing the process of the instant invention, it is important that the second emulsion which is combined with a microemulsion have a volume average droplet diameter which is greater than the volume average diameter of the droplets in the microemulsion. It is preferred that the droplets in the second emulsion be at least 150 Å, preferably at least 300 Å greater than, more preferably at least 1000 Å greater and most preferably at least 2000 Å greater than the droplets in the microemulsion.

A microemulsion, for purposes of this invention, is generally defined as a thermodynamically stable composition comprising two liquids or phases which are insoluble in each other along with a surfactant or surfactant mixture. Polymeric inverse microemulsions which contain a continuous oil phase and a polymer-containing discontinuous phase (usually aqueous) are prepared from thermodynamically stable monomer microemulsions. Inverse microemulsions have a narrow droplet size distribution and are usually, but not always, optically transparent. The discontinuous polymer-containing phase of microemulsions form droplets or micelles, which are usually aqueous and usually have a volume average droplet diameter which is less than 2500 Å, preferably less than 2000 Å and most preferably less than 1000 Å. Some microemulsions may have a volume average droplet diameter as large as 3000 Å.

The second emulsion used to prepare the compositions of the present invention is defined as an emulsion which may be a microemulsion or a macroemulsion containing a continuous oil phase and a discontinuous phase, which is in the form of droplets or micelles that are preferably aqueous, and surfactant. The term macroemulsion as used herein is defined as an emulsion which is not thermodynamically stable and which comprises two liquids or phases which are insoluble in each other along with surfactant or emulsifier; the macroemulsions used in this invention comprise a discontinuous polymer-containing phase, preferably aqueous, in the form of droplets or micelles.

When the second emulsion is a macroemulsion, it may be formed by conventional macroemulsion emulsion polymerization methods. If a multimodal emulsion is desired the second emulsion can be a microemulsion prepared by microemulsion polymerization technique as described below provided that the technique is modified to produce a

microemulsion that nas aqueous droplets having a volume average diameter which is greater than the volume average diameter of the droplets in the microemulsion with which it is being blended. Again, preferably the volume average diameter of the droplets in the second emulsion (microemulsion) should be generally at least 150 Å, preferably at least 300 Å greater than, more preferably at least 1000 Å greater and most preferably at least 2000 Å greater than the volume average diameter of the droplets in the microemulsion with which it is combined.

The microemulsions used in the process for preparing the emulsion blends herein comprise a continuous oil phase, which generally includes a water-immiscible inert organic liquid and a surfactant or surfactant mixture, and a discontinuous phase, preferably aqueous, containing a water-swellable, preferably water-soluble polymer. The ratio of the aqueous phase to the oil phase should be as high as possible and generally is such that the aqueous phase makes up from 0.5 to 3:1 part oil phase. Preferably the ratio approximates 1:1. Most preferably, the microemulsion comprises from 1 to 50% weight percent aqueous phase, based on the total weight of the microemulsion. The amount of polymer contained within the discontinuous phase of the microemulsions should also be as high as possible but can generally range from a few percent up to 100%, weight percent, based on the total weight of aqueous phase. The discontinuous aqueous phase may, therefore, contain 100% polymer and 0% water. The term "aqueous droplet" used for describing microemulsions herein includes droplets containing amounts of up to 100% polymer.

The polymers employed in the microemulsions used to prepare the stable compositions described herein are formed by microemulsion polymerization of certain water-soluble ethylenically unsaturated monomers or blend of monomers. Conventional microemulsion polymerization techniques as disclosed in, for example, U.S. Patent Nos. 5,037,881; 5,037,863; 4,681,912 and 4,521,317 may be employed.

Generally, microemulsion polymerization is produced by (i) preparing a monomer containing microemulsion by mixing an aqueous solution of monomers with a hydrocarbon liquid containing an appropriate amount of surfactant or surfactant mixture to form a water-in-oil microemulsion comprising droplets dispersed in a continuous oil phase and (ii) subjecting the monomer-containing microemulsion to polymerization conditions. It is not necessary to apply energy, e.g., apply shear, into the emulsion to obtain the small droplets, although a microemulsion prepared as disclosed herein, which is also is subject to shear is not beyond the scope of this invention.

The formation of the inverse microemulsion depends on the proper selection of surfactant concentration and the hydrophilic-lypophylic balance (HLB) of the surfact or surfactant mixture. Temperature, nature of the oil phase and composition of the aqueous phase will also affect inverse microemulsion formation.

The one or more surfactants selected generally should provide an HLB value ranging from 8 to 12. The required HLB may vary from this, depending on the nature of the monomers, the nature and proportion of comonomer (if any) and the nature of the oil phase. In addition to the appropriate HLB range, the surfactant concentration must be sufficient to form an inverse microemulsion. Too low surfactant concentrations will not result in the formation of a microemulsion, while excessively high concentrations will increase costs without imparting significant benefit. Typical surfactants useful in preparing the microemulsion used for the present invention include anionic, cationic and nonionic surfactants. Preferred surfactants include polyoxyetheylene sorbitol fatty acids, sorbitan sesquiolate, polyoxyetheylene sorbitan trioleate, sorbitan monooleate, polyoxyethylene (20) sorbitan monooleate, sodium dioctylsulfosuccinate, oleamidopropyldimethyl amine, sodium isostearyl-2-lactate, polyoxyethylene sorbitol monooleate or mixtures thereof and the like.

The selection of the organic phase has a substantial effect on the minimum surfactant concentration necessary to obtain the inverse microemulsion and may consist of hydrocarbons or hydrocarbon mixtures. Isoparafinic hydrocarbons or mixtures thereof are most desirable in order to obtain inexpensive formulations. Typically the organic phase will comprise mineral oil, toluene, fuel oil, kerosene, odorless mineral spirits, mixtures of any of the foregoing and the like.

Polymerization of the microemulsion may be carried out in any manner known to those skilled in the art. Initiation may be affected with a variety of thermal and redox free radical initiators, including peroxides, e.g. t-butyl hydroperoxide; azo compounds, e.g. azobisisobutyronitrile; inorganic compounds, such as potassium per sulfate and redox couples, such as ferrous ammonium sulfate/ammonium persulfate. Initiator addition may be affected any time prior to the actual polymerization per se. Polymerization may also be affected by photochemical irradiation processes, such as ultraviolet irradiation or by ionizing irradiation from a cobalt 60 source.

Typically the surfactant and oil are pre-mixed and added to an aqueous solution which contains the monomers and optional comonomers as defined above and any conventional additives such as, but not limited to, chelating agents such as ethylenediaminetetraacetic acid, chain transfer agents, difunctional monomers such as methylene bis(acrylamide), pH adjusters, initiators and the like. Once the aqueous and oil solutions are combined, an inverse microemulsion forms, without the need for shearing.

It has been found that a polymer which crosslinks or is capable of crosslinking, such as a water-soluble polymer-based polymer having functional groups which are capable of continually crosslinking at ambient conditions, including a dialkyl aminomethyl (Mannich) polyacrylamide PAM, are preferably employed in the microemulsion, rather than the second emulsion. Microemulsions are a preferred vehicle for such polymers because the smaller aqueous

droplets in the microemulsions tend to reduce undesirable effects resulting from crosslinking of the polymer. This maintains polymer performance while maintaining low bulk viscosity and high solids.

More specifically, in a preferred embodiment of the instant invention a second emulsion comprising any type of water-swellable or water-soluble polymer is blended with a microemulsion comprising a water-soluble polymer-based polymer having functional groups that are capable of crosslinking. These polymeric microemulsions are described in U.S. Pat. Nos. 4,956,400 and 5,037,863.

The water-soluble polymers which may comprise the basis for these polymers are those which are capable of reacting with a functionalizing agent to impart a functional group thereto per se or those which contain a group capable of being transformed into a functional group and exhibit cross-linking during the reaction with the functionalizing agent, during polymerization, during the transformation or upon aging. Also included are those polymers which are prepared from monomers containing functional groups. Examples of suitable water-soluble polymers include those procured from such monomers as the acrylamides such as acrylamide and methacrylamide;

N-alkyl acrylamides, such as N-methylacrylamide,
N-octylacrylamide;
N,N-dialkylaminoalkyl(alk)acrylamides such as N,N-dimethylaminomethyl acrylamide,
N,N-dimethylaminopropylmethacrylamide; the hydroxyalkyl(alk)acrylates such as hydroxyethyl acrylate, hydroxyethylmethacrylate;
N,N-dialkylaminoalkyl(alk)acrylates such as N,N-dimethylaminoethyl acrylate and methacrylate, N,N-diethylaminoethyl acrylate and methacrylate; unsaturated primary, secondary and tertiary amines such as allyl amine, diallylamine, N-alkyldially amines, mixtures thereof and the like. Preferably, the preferred polymers are produced from an (alk)acrylamide; a hydroxyalkyl (alk)acrylate; a N,N-dialkylamino-alky(alk) acrylate; or an allyl amine.

These water-soluble polymers used for making polymers that contain functional groups may be prepared, via known polymerization procedures, by polymerization of the above-enumerated monomers, alone or in conjunction with up to about 99.5% by weight, based on the total weight of the polymer, of additional non-ionic, cationic or anionic comonomers such as acryloylmorpholine; N-vinyl pyrrolidone; N-vinylformamide; the N,N-dialkylacrylamides such as N,N-dimethylacrylamide, N,N-dipropylacrylamide; the N,N-dialkylalkacrylamide such as N,N-dimethylmethacrylamide, N,N-dipropylmethacrylamide; diallyldialkyl ammonium chlorides; the salts and quaternaries of N,N-dialkylaminoalkyl (alk)acrylates, N,N-dialkylaminoalkyl(alk)acryamides etc; acrylic acid; methacrylic acid; fumaric acid; itaconic acid; maleic acid; 2-acrylamido-2-methylpropanesulfonic acid; styrene sulfonic acid, their salts, and the like.

Up to about 10% by weight, same basis, of water-insoluble comonomers (e.g. styrene; acrylonitrile; methyl acrylate; methyl methacrylate; vinyl acetate; etc.) may also be included in the base polymers.

The functional groups possessed by the polymers used in the present invention may be imparted thereto by (1) reacting a water-soluble polymer with an agent capable of adding a functional group thereto or (2) polymerizing a monomer capable of forming a water-soluble polymer in the presence of an agent capable of adding a functional group to the resultant polymer, or (3) polymerizing a monomer already possessing a functional group and capable of forming, alone or in conjunction with another monomer, a water-soluble polymer; or (4) polymerizing a monomer containing a group capable of being transformed into a functional group and capable of forming a water-soluble polymer, (1) alone or in conjunction with another monomer, or (2) after said group has been transformed into a functional group.

In the first instance, a water-soluble polymer is reacted with a material capable of adding a functional group thereto. For example, (1) acrylamide polymers may be reacted with such materials as, aldehydes, e.g., glyoxal, formaldehyde; halogens, e.g., chlorine, bromine and the like. (2) 2-hydroxyethyl methacrylate polymers may be reacted with such materials as epichlorohydrin; glyoxal; water-soluble diisocyanates; and the like (3) N,N-dimethylaminoethyl methacrylate polymers may be reacted with such materials as epichlorohydrin; bischloromethyl ether; 1,4-dichlorobutene-2 and the like; (4)diallyl amine polymers may be reacted with epichlorohydrin, bischloromethyl either; glyoxal; a,a-dichloroxylene and the like.

With respect to the second process discussed above, the above mentioned reactants can be added to the monomers used to prepared the polymer before or during the polymerization to add the functional group to the resultant polymer.

In the third process, any of the above described reactions can be carried out on the monomer first and then the resultant functionalized monomer may be polymerized under known conditions.

In the fourth method of preparation, the monomer being polymerized contains, or is made to contain, a group which is capable of being transformed into a functional group. For example, vinyl acetate may be copolymerized with N-vinyl pyrrolidone, the acetate groups are hydrolyzed into alcohol groups which are converted into functional groups by reaction with glyoxal, epichlorohydrin etc. Similarly, vinyl formamide may be polymerized and then hydrolyzed after which it may be reacted as above described as with the allyl amine monomers.

In addition to those reactions discussed above between, monomers, polymers, functionalizing agents etc.,

the following combinations of functionalities contained on the polymers can result in polymers which tend to crosslink and fall within the scope of the preferred systems contemplated herein:

amines:epoxides
amines:reactive halogens
amines:aldehydes
amines:esters
amines:silanes
amines:isocynates
amines:acid halides
amines:a,b-unsaturated carbonyl compounds
methylol:amides
methylol:amines
hydroxy:isocyanates
hydroxy:esters
hydroxy:aldehydes
hydroxy:epoxides
hydroxy:reactive halogens
hydroxy:acid halides
hydroxy:silanes
aldehydes:amides
aldehydes:thiols
thiols:reactive halogens
thiols:isocynates
thiols:acid halides

Preferred polymers that contain functional groups include glyoxalated poly(alk)acrylamide, and quaternary or tertiary Mannich poly(alk)acrylamide.

The functional group-containing polymers made by any of the above four procedures should be water-swellable or, preferably, water-soluble, and if it is not, should be reacted with an appropriate substituent to attain water-swellability or water-solubility. The resulting polymers, that are preferably substituted with at least 0.5 weight percent of functional groups, are capable of undergoing crosslinking, a phenomena which sometimes detrimentally effects the performance of the polymer over time. When such polymers are employed in a microemulsion, however, the detrimental effects of crosslinking are significantly reduced, if not overcome. This benefit is maintained in the multimodal emulsions of the present invention, if not enhanced. The multimodal emulsions resulting from combining a microemulsion comprising a polymer containing functional groups and a second polymeric emulsion having a certain total charge exhibit better performance as a flocculant in sludge dewatering than a single emulsion ( e.g., macroemulsion) comprising a polymer having an identical charge, as shown in Example 114.

In another preferred embodiment of the present invention, a microemulsion comprising a dialkyl aminomethylated (Mannich) (alk)acrylamideor quaternized derivative thereof is prepared for blending with a second emulsion comprising any water-swellable or water-soluble polymer. The Mannich (alk)acrylamide is preferably an acrylamide polymer substituted with at least 1 mole percent of tertiary aminomethyl groups and more preferably a quaternary derivative. In the second emulsion, which is preferably a macroemulsion, it is preferable to use a cationic polymer and more preferably an (alk)acrylamide-based cationic polymer including, but not limited to, cationic polymers containing monomeric units selected from quaternary dialkyl aminomethyl (alk)acrylamide; dialkyl aminomethyl (alk)acrylamide quaternary dialkylaminoalkyl (meth)acrylamides; dialkyl aminoalkyl (meth)acrylamides and copolymers thereof with acrylamide or (meth)acrylamide with a monomer selected from quaternary dialkylaminoalkyl (meth)acrylates dialkylaminoalkyl (meth)acrylates and diallyldialkylammonium halides. Among these, copolymers of acrylamide with quaternary dialkylaminoalkyl (meth)acrylates are particularly preferred and copolymers of acrylamide and methacryloyloxyethyltrimethylammonium salt (including halides and sulfites) are most preferred, particularly those having a 1 to 60 mole percent cationic functionality, based on the monomer, more preferably 1-20 mole percent. Optionally, a difunctional monomer such as methylene bisacrylamide or the like may be incorporated into the monomer solution prior to polymerization. Any cationic polymer containing 1-60 mole percent, most preferably 1-20 mole percent cationic functionality, based on monomer, may be employed in the second emulsion. Microemulsions containing a cationic polymer preferably a quaternized or tertiary Mannich PAM, more preferably those polymers containing from 20 to 100 mole percent cationic functionality, based on the monomer, more preferably from 60 to 90 mole percent cationic functionality, may be combined with the second emulsions comprising any water-swellable or water-soluble polymer including the preferred cationic (alk)acrylamide-based polymers described above. While it is most preferred to include a quatemary

Mannich (alk)acrylamide polymer in the microemulsion, the unquatemized Mannich acrylamide polymer is also contemplated within the scope of this preferred embodiment.

In yet a most preferred embodiment of the instant invention, a composition comprising a blend of two emulsions, one of which is a microemulsion containing in its discontinuous phase a quatemized Mannich PAM and the second, which is preferably a macroemulsion, containing in its discontinuous phase a copolymer of acrylamide and a quaternary dialkylaminoalkyl (alk)acrylate such as (meth)acryloyloxyethyltrimethyl ammonium salt which includes halides and sulfites. The quatemized Mannich PAM should have a cationic charge which differs from the cationic charge on the acrylamide/(meth)acryloyloxyethyltrimethyl ammonium salt. Generally, such preferred blends comprise a quaternary Mannich PAM containing from 20 to 100 mole percent cationic functionality, based on the monomer, more preferably from 60 to 90 mole percent cationic functionally, based on monomer blended with a second emulsion, preferably a macroemulsion, comprising acrylamide/(meth)acryloyloxyethyltrimethyl salt copolymer containing from 1 to 60 mole percent cationic functionality based on monomer, preferably from 1 to 20 mole percent cationic functionality, based on the monomer. For example, combinations of a quatemary Mannich PAM microemulsion having a 75% cationic charge with an (alk)acrylamide/(meth)acryloyloxyethyltrimethyl halide copolymer macroemulsion having a 10% cationic charge may be blended at different ratios and with aldehyde scavenger to provide stable emulsion blends having a variety of intermediate charges such as polymer combinations with 55%, 35% and 20% total cationic functionality, based on the monomer. Great cost advantages are attained by preparing this bimodal emulsion in this manner, as opposed to synthesizing a single polymeric emulsion having a 55%, 35% or 20% cationic charge. And, the resulting polymeric emulsion blends may exhibit flocculation performance that is just as effective, if not more effective, than a single microemulsion, macroemulsion or a solution containing a similar polymer of identical cationic charge.

In yet another embodiment of the present invention, microemulsion Mannich PAMs and quaternized derivatives thereof are combined with a second emulsion, preferably a macroemulsion, containing any water-swellable, preferably water-soluble, anionic polymer, most preferably an (alk)acrylamide-based anionic polymer, most preferably an anionic polymer selected from and copolymers of (alk)acrylamide with one or more anionic monomers selected from acrylic acid, methacrylic acid, acrylates and their alkali metal or ammonium salts; vinyl sulfonic acid; acrylamido-2-methyl propanesulfonic acid and their salts; and homopolymers of (meth)acrylic acid,acrylic acid, vinyl sulfonic acid; acrylamido-2-methyl propanesulfonic acid; acrylamido-alkyl sulfonic acid or their alkali metal salts. Preferred anionic polymers employed in the microemulsions used in the present invention contain from 20 to 100 mole percent anionic functionality, based on the monomer, more preferably from 60 to 90 mole percent anionic functionality, based on monomer. Preferred anionic polymers employed in the second emulsions used in the present invention contain from 1 to 60 mole percent anionic functionality based on monomer, preferably from 1 to 20 mole percent anionic functionality, based on the monomer.

Emulsion blends comprising polymeric microemulsions, preferably quaternary Mannich PAM microemulsions, with second emulsions, preferably macroemulsions, containing any nonionic water-soluble polymer such as acrylamide or methacrylamide are also contemplated within the scope of this invention.

In a broad sense, it is also within the scope of this invention to combine any of the following water soluble polymeric emulsions: a cationic polymeric microemulsion, preferably a quaternary Mannich PAM, with non-ionic or anionic polymeric second emulsions and to combine nonionic or anionic polymeric microemulsions with cationic, anionic or nonionic polymeric, preferably (alk)acrylamide-based polymeric, second emulsions.

The Mannich acrylamide polymer-containing microemulsion is prepared by admixing an aqueous solution comprising acrylamide monomer with a liquid hydrocarbon, such as a low odor paraffin oil, which contains a suitable surfactant such as a mixture of polyethylene sorbitol fatty ester and sorbitan sesquioleate. Optionally, additional vinyl comonomers such as those described above, may be included in the above mixture and a polymerization catalyst may be additionally included. The resulting admixture forms a water-in-oil microemulsion which is subject to polymerization conditions, reacted with an effective amount of formaldehyde and a secondary amine, or a complex formed by a formaldehyde and secondary amine, to form an amino methylated polyacrylamide or Mannich PAM.

Formaldehyde compounds useful in preparing Mannich acrylamide polymers are selected from formaldehyde, paraformaldehyde, trioxane or aqueous formalin, and the like. Useful secondary amines are generally selected from those containing 2 to 8 carbon atoms which are aliphatic, cyclic, straight chained, branched or substituted. Preferred secondary amines include dimethylamine, methylethylamine, diethylamine, amylmethylamine, dibutylamine, dibenzylamine, piperidine, morpholine, ethanolmethylamine, diethanolamine or mixtures thereof.

A preferred method of amino methylation involves a process wherein the formaldehyde comprises formalin and the secondary amine comprises dimethylamine. It is also preferred to employ a formaldehyde-secondary amine complex such as N,N-dimethylaminomethyl alcohol. The ratio of formaldehyde to amine is not critical and generally can range from 10:1 to 1:10 by mole, respectively. It is generally preferred, however, to use a molar ratio as close to 1:1 as practical. A sufficient quantity of the amine and formaldehyde, or complex thereof, is required to amino methylate and impart tertiary amino methyl groups to the (alk)acrylamide polymer, preferably to impart at least 1 mole percent of tertiary aminomethyl groups. The Mannich PAM may be quaternized by methods known in the art, such as by reacting

the Mannich polymers with quaternizing agents such as methyl chloride, dimethyl sulfate, benzyl chloride and the like under known conditions.

The amino methylation or Mannich reaction is preferably performed after microemulsion monomer polymerization by adding formaldehyde and secondary amine to the polymer to form the tertiary aminomethyl substitutent on the polymer backbone. It is also possible, to perform the Mannich reaction at various stages in relation to inverse microemulsion monomer polymerization. For example, one may react the (alk)acrylamide monomer with the formaldehyde and secondary amine prior to the inverse microemulsion formation and before polymerization of the monomers. Also contemplated, is adding the formaldehyde and secondary amine to the aqueous solution prior to polymerizing and then simultaneously polymerizing the (alk)acrylamide monomer and carrying out the Mannich reaction. However, these alternative procedures are less preferred than adding the formaldehyde and secondary amine after inverse microemulsion monomer polymerization is complete. The preparation of Mannich acrylamide polymers and quaternized derivatives thereof is further described in U.S. Patent No. 5,037,881 which is incorporated herein by reference.

Quaternized Mannich (alk)acrylamide polymers are preferably heat treated in their microemulsion form, before being blended with the second emulsion. Heat treatment is conducted according to the procedure in U.S. application Serial No. 08/018,858, filed on February 12, 1993, which is incorporated herein by reference. Generally, heat treatment is performed by (a) adding to the untreated quaternized Mannich PAM microemulsion, with agitation, an aqueous solution containing an acid such that the pH range of the resulting quaternized Mannich PAM microemulsion is from 3.6 to 4.8; preferably 3.8 to 4.6, and adding a formaldehyde scavenger, (b) adjusting the polymer content of the aqueous phase to 10 to 45 wt. percent, preferably 20-40, wt. percent, and (c) heating the quaternized Mannich PAM polymer microemulsion obtained in step (b) to a temperature of from 40° to 80°C for from 3 to 20 hours.

Any water-soluble acid may be used in this heat treating procedure. The acid is preferably employed as an aqueous solution and preferably comprises (i) an organic carboxylic acid, an inorganic acid or a combination thereof in an amount sufficient to provide a pH of from 3.6 to 4.8 in the resulting emulsion; (ii) from 0.01 to 30 mole percent of a formaldehyde scavenger based on the total moles of quaternized Mannich PAM microemulsion; and (iii) water, if necessary, in an amount such that when added to the microemulsion the resulting aqueous phase contains from 10 to 45 weight percent of quarternized amino methylated PAM microemulsion.

The acid, preferably an organic carboxylic acid, inorganic acid and/or combination thereof, generally is used in sufficient quantity such that the resulting pH of the microemulsion is from 3.6 to 4.8, preferably 3.8-4.6. The quantity of each individual acid or combination of acids employed in the stabilized solution is determined by acidity (pKa) of each individual acidic component. The total amount of acid used in the practice of the present invention generally may vary from 1 to 40 mole percent based on the total number of moles of polymer present in the microemulsion. The only limitation on the acid used is that it be inert with respect to the ingredients which are present in the microemulsion system, i.e. emulsifier, polymer, oil and other generally added ingredients.

Acids which may be employed for use herein include, but are not limited to, mono and multifunctional carboxylic acids such as acetic, maleic, fumaric, formic, acrylic, succinic, lactic, citric and the like; inorganic acids such as sulfurous, phosphoric, phosphorous and sulfuric acids as well as salts of these acids such as the alkali salts of sulfurous acid, aluminum sulfate, aluminum chloride, sodium sulfate and the like. Any combination of the above-mentioned acids may be employed as long as the quaternized Mannich PAM microemulsion has, after the addition of the stabilizer solution, a pH within the range set forth above.

The formaldehyde scavengers useful for stabilizing the microemulsion are those water-soluble compounds which have the capability to react with formaldehyde. The source of formaldehyde in the quaternized Mannich (alk) acrylamide polymer microemulsion of the present invention results, in theory, from unreacted formaldehyde or from labile formaldehyde components that release formaldehyde. The quantity of formaldehyde scavenger used in the present invention generally ranges from 0.01 to 30 mole percent, preferably ranging from 0.6 to 15 mole percent, based on the moles of polymer in the microemulsion.

Typical formaldehyde scavengers are those known in the art, and include, but are not limited to, urea, substituted ureas such as ethylene urea, guanidine salts, dicyandiamide, sulfurous acid and any of its alkali metal salts such as sodium bisulfite, sodium metabisulfite and the like, as well as phosphorous acid and mixtures of any of the foregoing.

The quantity of water preferably used in the stabilizer solutions is selected such that the resulting aqueous phase of the microemulsion contains from 10 to 45 weight percent polymer, based on the weight of the total aqueous phase, more preferably from 15-40 weight percent, same basis.

The formaldehyde scavenger and the acid, preferably in the form of an aqueous solution, thereof, as described hereinabove, are then added to the microemulsion with mixing. The resulting microemulsion is then heated, generally to a temperature ranging from 40 to 80°C for a time of from 3 to 20 hours. The heating step can be carried out immediately after addition of the acid, scavenger and/or water, however, it is also possible to delay the heating up to the desired time of use of the microemulsion as a flocculant.

The stabilized quaternized Mannich PAM microemulsion obtained after the heating step will successfully invert

when added to water independent of the temperature or pH of the water used. The aforesaid heat treating step is preferred, but not essential, for microemulsions comprising quaternary Mannich (alk)acrylamide polymers which are used for preparing emulsion blends. When heat treating is not performed, the inversion of the emulsion blends are more dependent on pH and temperature. When the microemulsion used for preparing the emulsion blend does not contain formaldehyde, as with other polymers, then the heat treating step described above need not be performed.

Another preferred embodiment is directed to multimodal emulsions and stabilized emulsion blends comprising a blend of at least two emulsions wherein at least one emulsion is a microemulsion containing a water-swellable or water-soluble glyoxalated (alk)acrylamide.

Microemulsions containing glyoxalated (alk)acrylamide polymer are known in the art and disclosed, along with their methods of preparation, in U.S. Patent Nos. 4,954,538 the disclosure of which is incorporated herein by reference.

The (meth)acrylamide polymers which are glyoxalated in accordance with the present invention are prepared from such (meth)acrylamide monomers as acrylamide; per se, methacrylamide; N-alkylacrylamides such as N-methyl acrylamide; N-butylacrylamide etc; N-alkyl methacrylamides such as N-ethylmethacrylamide and the like. The glyoxalated (meth)acrylamide-containing polymer should have (1) sufficient glyoxal-reactive amide substituents and CHOHCHO substituents to cross-link, said -CHOHCHO substituents being present in excess of 0.5 weight percent and (2) droplet diameters which range from 0.02 to 0.3µ. Preferably, the -CHOHCHO substituents are present in excess of 1.0 weight percent, and most preferably in excess of 5.0 weight percent. Preferred droplet diameters range from 0.03µ to 0.2µ, and even more preferably range from 0.035µ to 0.1µ.

Optionally, it is preferred that the glyoxalated polymers also possess some degree of cationicity, sufficient to aid in rendering them self-substantive to cellulose fibers in aqueous suspensions. The proportion of cationic groups which is preferred is small, generally less than 10 mole percent of the polymer, although a larger proportion may be employed, if desired.

Suitable cationic monomers useful for preparing glyoxalated polymers comprise cationic, ethylenically unsaturated monomers of the following formula:

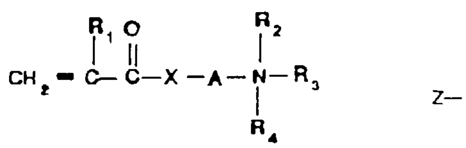

where $R_1$ is hydrogen or methyl, $R_2$ is hydrogen or lower alkyl of $C_1$ to $C_4$, $R_3$ and/or $R_4$ are hydrogen, alkyl of $C_1$ to $C_{12}$, aryl, hydroxyethyl and $R_2$ and $R_4$ or $R_2$ and $R_3$ can combine to form a cyclic ring containing one or more hetero atoms and Z is the conjugated base of acid, X is oxygen or - $NR_1$ wherein $R_1$ is as defined above, and A is an alkylene group of $C_1$ to $C_{12}$; or

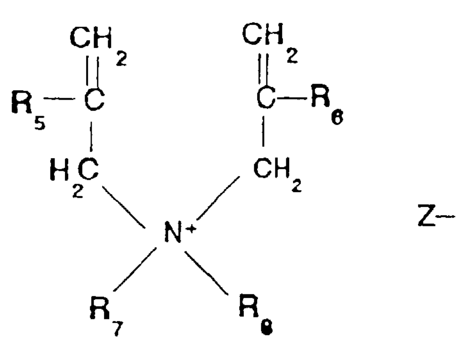

where $R_5$ and $R_6$ are hydrogen or methyl, $R_7$ is hydrogen, alkyl of $C_1$ to $C_{12}$ or benzyl and $R_8$ is hydrogen, alkyl of $C_1$ to $C_{12}$ benzyl or hydroxyethyl; and Z is as defined above.

Preferred cationic monomers include diallyl dialkylammonium chlorides, 1-methyacryloyl-4-methyl piperizine;

N,N-dialkylaminoalkyl(meth)acrylates; N,N-dialkylaminoalkyl(meth)acrylamides, salts, quaternaries and mixtures thereof.

In addition, up to 85 mole percent of the (meth)-acrylamide containing polymer may be composed of a water-soluble, non-ionic, ethylenically unsaturated comonomer copolymerizable therewith such as N-vinyl pyrrolidone; N,N-dialkyl(meth)acrylamides including N,N-dimethyl acrylamide; hydroxyalkyl(meth)acrylates; N-vinyl formamide and the like.

Furthermore, the (meth)acrylamide containing polymers useful herein may contain small amounts, i.e. up to 10 mole percent, of other copolymerizable monomers such as methyl acrylate; methyl methacrylate; acrylonitrile; vinyl acetate; styrene and the like.

The glyoxalated (meth)acrylamide polymers can be prepared in several ways. One approach is to prepare an inverse microemulsion containing (meth)acrylamide and, optionally, a cationic and/or other monomer(s), and to subject it to simultaneous polymerization conditions. After the polymerization is complete, glyoxal is added to the polymerization media and reacted with the polymer in the aqueous polymer containing droplets. The rate of the reaction of the glyoxal with the polymer can be controlled with temperature and pH. Generally, temperatures ranging from 10°C to 90°C and a pH of 2 to 7, may be used. The rate of reaction increases with increasing temperate and pH.

A second approach is to prepare an inverse microemulsion containing (meth)acrylamide/glyoxal, and, optionally, a cationic or other monomer, and to subject it to simultaneous polymerization and glyoxalation conditions. The glyoxal present in the aqueous droplets reacts with the (meth)acrylamide monomer or the resultant polymer or both to produce the glyoxalated polymer, as discussed above. Both of these approaches lead to inverse microemulsions possessing aqueous droplets containing glyoxalted (meth)acrylamide polymers.

In yet another embodiment of the present invention, stabilized compositions comprising at least one microemulsion, at least one second emulsion and a blend stabilizing amount of aldehyde scavenger are provided. Generally, the addition of a blend stabilizing amount of aldehyde scavenger is employed when the emulsion blend contains: 1) a polymer, typically an (alk)acrylamide-based polymer, capable of reacting with any aldehyde compounds, and 2) a functionalized polymer which, for purposes of defining the invention herein, is any (alk)acrylamide-based polymer which contains, generates or is capable of generating a compound capable of reacting with the (alk)acrylamide based polymer in the emulsion blend. Such compounds are usually aldehydes, such as for example, formaldehyde, acetaldehyde, glyoxal or higher aldehydes. Typically, such aldehyde compounds may arise from residual unreacted aldehyde or be generated, for example, during the preparation of the functionalized polymer in the microemulsion, which includes polymerization and any subsequent reactions such as a Mannich reaction or glyoxalation. The functionalized polymers should be water-swellable, preferably water-soluble. Functionalized polymers preferably include quaternized Mannich PAMs, Mannich PAMs and glyoxalated poly(alk)acrylamide (PAM) and variations of such polymers where the Mannich or glyoxalation reactions on the (alk)acrylamide backbone are run at less than 100 percent substitution. Methods of doing this are disclosed in U.S. Patent Serial No. 08/018,858, filed February 12, 1993 and U. S Patent Nos. 4,956,399 and 4,956,400. Quaternary Mannich PAMs such as quaternary N,N,N-trimethylaminomethylacrylamide are generally preferred, more preferably quaternary Mannich PAMs containing from 20 to 100 mole percent, more preferably from 60 to 90 mole percent cationic functionality, based on the monomer, are most preferred. The backbones of the Mannich and glyoxalated (alk)acrylamide polymers may also comprise an (alk)acrylamide copolymerized with the any of the various water-soluble ethylenically unsaturated cationic or nonionic comonomers described above in amounts up to 90 percent and anionic comomoners in smaller amounts and still be considered a functionalized polymer.

Suitable cationic comonomers for preparing functionalized polymers for use in the microemulsions include dialkylaminoalkyl (meth)acrylates and dialkylaminoalkyl (meth) acrylamides, including their acid addition or quaternary ammonium salts, diallyl dialkyl ammonium halides and vinyl benzyltrialkyl ammonium salts.

Preferred anionic comonomers for use in preparing the functionalized polymers used in the present invention generally are vinyl anionic monomers and include acrylic acid, methacrylic acid, ethacrylic acid, furmaric acid, crotonic acid, maleic acid and satls thereof; vinyl sulfonic acid, 2-acrylamido-2-alkylsulfonic acids where the alkyl group contains 1 to 6 carbon atoms, such as 2-acrylamido 2-methyl-1-propanesulfonic acid, styrene sulfonic acid or mixtures of any of the foregoing and their salts.

The preferred ethylenically unsaturated nonionic monomers for use in the preparation of the functionalized polymers used in the present invention are selected from acrylamide; methacrylamide; dialkylaminomethyl acrylamides; N,N-dialkylmethacrylamides; N-alkylacrylamides; N-vinylpyrrolidone, hydroxyalkyl methacrylates; N-vinyl-acetamide; N-vinylformamide and the like and mixtures thereof. Especially preferred is acrylamide and (meth)acrylamide. Small amounts of hydrophobic comonomers can be included in the polymers employed in the microemulsions or second emulsions used in the stable compositions such as styrene, methylmethacrylate, methylacrylates, (meth)acrylate esters containing 1-16 carbons, vinyl acetate and higher esters, acrylonitrile, vinyl chloride and the like.

The (alk)acrylamide-based polymers employed in the second emulsions are formed by emulsion polymerization of water-soluble (alk)acrylamide or (alk)acrylamide-based monomers optionally polymerized with comonomers. Suitable water soluble monomers for preparing such polymers include (alk)acrylamide such as acrylamide, (meth)acrylamide, ethacrylamide and the like; quaternary dialkyl aminomethyl(alk)acrylamide; dialkyl aminomethyl (alk)acrylamide; quaternary dialkylaminoalkyl (meth)acrylamides; dialkylaminoalkyl (meth)acrylamide and copolymers of acrylamide or methacrylamide with any of the aforesaid monomeric units or a monomeric unit selected from dialkylaminoalkyl (meth)acrylates, quaternary dialkylaminoalkyl (meth)acrylates, diallyldialkylammonium halides, acrylamidoalkyl sulfonic acid and its salts such as 2-acrylamido-2-methyl-1-propanesulfonic acid and (meth)acrylic acid. The aforesaid monomers may be homopolymerized or copolymerized and subsequent reactions therein known in the art such as aminomethylation (Mannich) reactions or glyoxation can be performed. Any of the aforesaid monomers may be copolymerized with any of the various water-soluble ethylenically unsaturated cationic or nonionic or anionic comonomers described above. The aforesaid monomers may be copolymerized with small amounts of hydrophobic monomers. The (alk)acrylamide-based polymers in the second emulsion may therefore be cationic, anionic or nonionic in charge.

More preferably, an aldehyde scavenger is used when a quaternary Mannich Pam, Mannich PAM or glyoxalated PAM microemulsion is blended with a second emulsion comprising any (alk)acrylamide-based polymer, preferably a polymer containing monomeric units selected from dialkyl aminomethyl (alk)acrylamide; quaternary dialkyl aminomethyl (alk)acrylamide; quaternary dialkylaminoalkyl (meth)acrylamides, dialkylaminoalkyl (meth)acrylamides; acrylamido-2-alkyl sulfonic acid or copolymers of acrylamide or methacrylamide with any of the foregoing monomers or a monomer selected from quaternary dialkylaminoalkyl (meth)acrylates N,N,-dialkylaminoalkyl (alk)acrylates; quaternized alkyl (amyl)halides; diallyldialkylammonium halides; and (meth)acrylic acid acrylic acid and salts thereof.

In combining a microemulsion containing a functionalized polymer with a second emulsion containing an (alk) acrylamide-based polymer, the preferred polymer combinations will vary according to the substrate to be treated and the application for which the resulting stabilized emulsion is used. For example, to treat a sludge from coal refuse it would be preferable to combine a microemulsion comprising an anionic functionalized polymer with a macroemulsion comprising an anionic alk-acrylamide-based polymer. The preferred combinations described above, such as a quaternized Mannich acrylamide microemulsion blended with a macroemulsion comprising (meth)acryloxyethyltrimethylammonium salts or copolymers of acrylamide and (meth)acryloxyethyltrimethylammonium salts may be used to prepare the stable compositions of the instant invention.

The term "aldehyde scavenger", as used herein, means and includes those compounds, preferably water-soluble compounds, which have the capability of reacting with any aldehyde, such as formaldehyde, acetaldehyde, glyoxal, and the like, though preferably formaldehyde. Such aldehyde compounds are present in or generated from the microemulsion which is blended with the second emulsion to produce the stabilized composition and they result, in theory, from unreacted aldehyde or from components that release aldehyde. Suitable aldehyde scavengers include those known in the art, and include, but are not limited to, urea, substituted ureas, such as ethylene urea, guanidine salts, dicyanamide, dimedone (5,5-dimethyl-1,3-cyclohexanedione), sulfurous acid and any of its alkali metal salts such as sodium bisulfite, sodium metabisulfite and the like, as well as phosphorous acid, and mixtures of any of the foregoing. Urea, substituted ureas and dimedone and mixtures thereof are preferred.

"Blend stabilizing amount" generally refers to the amount of aldehyde scavenger necessary for stabilizing the emulsion blend, i.e. maintaining performance of the polymer activity in the emulsion blend. Preferably, "blend stabilizing amount" means the amount of aldehyde scavenger necessary for reducing polymer degradation (e.g. through cross-linking or otherwise), primarily the (alk)acrylamide-based polymer. This amount is provided by adding from 0.1 to 10 weight percent aldehyde scavenger, based on the total weight of the composition, to the emulsion blend. The three methods of adding the aldehyde scavenger to the blend are described below. The quantity of aldehyde scavenger used in the present invention may generally be as low as 0.1 weight percent, based on the weight of the stabilized composition, preferably at least 0.7 weight percent, based on the weight of the stabilized composition. Generally amounts ranging up to 10.0 weight percent, preferably up to 5.0 weight percent, based on the weight of the stabilized composition, may be used. While higher amounts of aldehyde scavenger are also effective, such amounts are usually less desirable since the benefits are usually offset by cost considerations. Blend stabilizing amounts of aldehyde scavenger used in the present invention preferably range from 0.7 to 5.0 weight percent, based on the total weight of the stabilized composition. However, these amounts may vary as discussed below, depending upon the microemulsion used. The blend stabilizing amount of aldehyde scavenger may be added neat or it may be added as an aqueous solution, usually a 40 to 60 weight percent solution.

The stabilized compositions of the present invention, which comprise a blend of at least two emulsions, may be prepared by three different methods. Thus, they may be prepared by:

(a) preparing a microemulsion containing a water-swellable or water-soluble functionalized polymer;
(b) preparing a second emulsion containing a water-swellable or water-soluble (alk)acrylamide-based polymer;
(c) admixing the microemulsion and the second emulsion to form a blend of emulsions; and
(d) adding a blend stabilizing amount of aldehyde scavenger to the emulsion blend.

Alternatively, instead of adding the aldehyde scavenger to the emulsion blend, the stabilized multimodal emulsions of the present inventions may be prepared by:

(a) preparing a microemulsion comprising a water-swellable or water-soluble functionalized polymer;
(b) preparing a second emulsion comprising a water-swellable or water-soluble (alk)acrylamide-based polymer and a blend stabilizing amount of aldehyde scavenger; and
(c) admixing the microemulsion and the second emulsion.

A third method of preparing the stable multimodal emulsions of the present invention is by:

(a) preparing a microemulsion comprising a water-swellable or water-soluble functionalized polymer ;
(b) preparing a second emulsion comprising a water-swellable or water-soluble (alk)acrylamide-based polymer;
(c) adding a blend stabilizing amount of aldehyde scavenger compound to the microemulsion resulting from step (a).
(d) admixing the microemulsion resulting from step (c) and second emulsion to form a blend of emulsions.

It is preferred to add the aldehyde scavenger to the second emulsion, particularly if it is a macroemulsion, and then admix the microemulsion thereto. While a blend stabilizing amount of aldehyde scavenger may be added to the second emulsion at any stage, it is preferred to add it to the aqueous monomer phase of the second emulsion before polymerization for manufacturing and handling reasons and to maximize the solids content. In contrast, while a blend stabilizing amount of aldehyde scavenger may be added to the functionalized-polymer containing microemulsion prior to blending, the aldehyde scavenger should not be added to the aqueous monomer phase of that microemulsion, but must be added to the microemulsion after it has been prepared and functionalized. This is to assure that sufficient aldehyde scavenger enters the droplets of the second inverse emulsion for stabilization.

When the microemulsion contains a quaternary Mannich PAM, Mannich PAM or glyoxalated PAM it can be heat treated by adjusting the pH to 3.6 to 4.8 and adding a formaldehyde scavenger and heating as described above before mixing with the second emulsion and adding a blend stabilizing amount of aldehyde scavenger to the emulsion blend, preferably directly to the second emulsion prior to blending. The amount of formaldehyde scavenger that is added to the microemulsion in heat treating may alter the blend stabilizing amount of aldehyde scavenger that is added to the second emulsion or the emulsion blend.

While heating and adjusting the pH of the microemulsion is critical to heat treating the microemulsion, the present method of preparing the stabilized blend of emulsions does not require heating or pH adjustments. Generally and preferably, the microemulsion, which is optionally heat treated, is simply mixed with the second emulsion containing a blend stabilizing amount of aldehyde scavenger at ambient temperature and with modest mixing. Less preferably, the aldehyde scavenger may be added to the blend of the microemulsion and second emulsion or to the microemulsion prior to blending at ambient temperatures and with modest mixing conditions. The above procedure applies regardless of whether the second emulsion is a macroemulsion or a microemulsion.

The art recognizes that certain aldehyde scavengers may not be effective at certain pH's, i.e., that they do not react with formaldehyde, and therefore, even though the stabilization method of the instant invention does not necessitate any specific pH range, it is important that the particular aldehyde scavenger used to prepare the stable emulsion blend be effective at the pH of the emulsion blend. Thus, pH adjustments may be made, based on the known chemistry of the aldehyde scavenger used. For example, urea is known to be less reactive with formaldehyde at alkalinity levels above a pH of 7, so it would be preferred to adjust the pH of the emulsion blend to a pH ranging from 6 to 2. Similarly, pH adjustments may be necessitated by the known chemistry of the particular (alk)acrylamide-based polymer used in the microemulsion or second emulsion. Any such pH adjustments may be made based on knowledge in the art and with routine experimentation, if necessary.

The second emulsion may be a macroemulsion or a microemulsion prepared according to conventional microemulsion polymerization procedures, such as disclosed above. If a low viscosity multimodal emulsion blend is desired, the second emulsion is preferably a macroemulsion or it may be a microemulsion provided that the its discontinuous phase droplets, have a volume average diameter which is greater, generally at least 150 Å greater, preferably 300 Å greater, more preferably 1000 Å greater and most preferably at least 2000 Å greater than the volume average diameter of the droplets in the microemulsion with which it is blended. Using common knowledge of those skilled in the art, along with simple experimentation, one can modify the microemulsion polymerization to obtain slightly larger aqueous droplets. The multimodal emulsions herein may also be stabilized by the addition of an aldehyde scavenger.

The second emulsion may, alternatively, be a conventional water-in-oil macroemulsion, prepared by conventional macroemulsion polymerization methods known in the art, such as, for example, that disclosed in U.S. Pat. No. 3,284,393 to Vanderhoff et al. Any known polymerizable water-soluble ethylenic unsaturated monomer, including those specifically described above, which produce water-swellable or water-soluble polymers that are insoluble in the continuous oil phase, and can be polymerized, may be used to prepare the inverse macroemulsions used in the process of the present invention. The water-soluble monomers and monomer mixtures are polymerized to low or high molecular weight polymers or copolymers using a water-in-oil emulsion polymerization procedure in which the water-soluble monomers are emulsified in an oil phase by means of a water-in-oil emulsifier and subject to polymerization conditions to form the inverse macroemulsion which is used in the process of the instant invention. The monomer content in the aqueous solution generally can vary anywhere between 5 and 100% by weight monomer, though this may vary depending on the monomer and temperature of polymerization. Thus, the discontinuous phase or droplets are usually aqueous but may consist of 100% polymer, and 0% water and are prepared using methods known in the art. The term "aqueous droplets" as used for describing macroemulsions herein includes droplets containing amounts of 100% polymer.

The ratio of aqueous phase, which is defined as the monomers or polymer and water, to oil phase widely varies generally between 0.1:1 to about 4:1, preferably, between 1:1 to 4:1. The oil phase includes the hydrocarbon liquid and the surfactant dissolved or dispersed therein.

An emulsifying agent of the water-in-oil type is used generally in amounts ranging from 1 to about 6% by weight of the aqueous phase, in order to emulsify the monomer-containing aqueous phase into the oil phase. A wide variety of conventional water-in-oil emulsifying agents which are typically used to prepare macroemulsions may be used, such hexadecyl sodium phthalate, sorbitan monoleate, sorbitan monostearate, cetyl or stearyl sodium phthalate, metal soaps, and the like. Upon performing relatively simple tests one skilled in the art would be able to determine whether a specific water-in-oil emulsifying agent or emulsifier mixture would be adequate for a particular system.

The oil phase can be any inert hydrophobic liquid such as, for example, hydrocarbons, perchloroethylene, aryl hydrocarbons, such as toluene and xylene. Preferably paraffin solvents are used.

Polymerization of the macroemulsion may be carried out pursuant to those methods known in the art, including high energy irradiation such as gamma irradiation $CO^{60}$, ultraviolet irradiation or the like. Free radical initiators may also be used, such as potassium persulfate, as well as azo compounds. peroxides and redox pairs or the like. Certain polymerization methods may preferably be carried out at elevated temperatures.

Preferably, the emulsifying agent is dissolved in the oil phase and the monomer-containing aqueous phase is added to the oil phase with agitation until the aqueous phase is emulsified in the oil phase. Additional conventional additives such as chelating agents, small amounts of chain transfer agents and difunctional monomers such as methylene (bis)acrylamide, may also be dissolved in the aqueous phase or mixed into the inverse emulsion. Polymerization agents, such as free radical initiators, may be dissolved in the oil or aqueous phase or the emulsion. Polymerization is conducted preferably with agitation, until conversion is substantially complete. The resulting polymeric macroemulsion may be subsequently stabilized or treated according to any methods known in the art.

While the preferred embodiment of this invention contemplates blending one polymeric microemulsion with one second emulsion, which is preferably a macroemulsion, the instant claimed invention may be applied to the blending of more than two emulsions, such as blending two or more microemulsions with one macroemulsion or blending one microemulsion with two or more macroemulsions. If a low viscosity multimodal emulsion is desired, When two or more microemulsions are combined with a second emulsion, the volume average aqueous droplet diameter in the second emulsion must be greater than, generally at least 150 Å greater, preferably at least 300 Å greater, more preferably at least 1000 Å greater and most preferably at least 2000 Å greater than the smallest volume average aqueous droplet diameter among the microemulsions. In cases where two or more second emulsions are combined with one microemulsion, the second emulsion having the largest volume average droplet diameter must be greater than the volume average droplet diameter of the droplets in the microemulsion in order to provide a multimodal emulsion. A variety of polymer combinations may be incorporated in the foregoing.

The multimodal emulsions and stabilized emulsion blends produced by the present invention are useful in facilitating a wide variety of solid-liquid separation operations such as flocculation for waste water treatment or for paper manufacture processes, the clarification of deinking process waters and the like. The emulsion blends, preferably those having a cationic charge, may be used in the dewatering of biologically treated suspensions, such as sewage and other municipal or industrial sludges, the drainage of cellulosic suspensions such as those found in paper production, in the treatment of paper waste, and settlement of various suspensions, i.e., refinery waste, food waste, etc. The emulsions of the present invention may also be used as retention aids, wet strength or dry strength agents in the manufacture of paper, for protein recovery and as mining waste treating and settling aids.

With respect to flocculation applications, the multimodal and stablized emulsions herein may be employed in their emulsion form or in the form of dilute aqueous polymer-containing solutions prepared by inverting the emulsions into water, optionally in the presence of a breaker surfactant. When breaker surfactant is added, it should be in an amount sufficient to enable the inverted polymer or polymer combination to reach its maximum solution viscosity. Optionally, the breaker surfactant may be added to the microemulsion or the second emulsion or both before mixing the two.

In addition to inverting the emulsions of the present invention, the polymers in the emulsion blends may be recovered from the emulsion by conventional means, such as by stripping or by adding the emulsion blend to a solvent

which precipitates the polymer, e.g., isopropanol or acetone, filtering off the resultant solids, drying and redispersing in water to form a dilute aqueous solution containing polymer. Dilute aqueous solutions include solutions containing water-swellable as well as water-soluble polymers. The emulsion blends of the present invention may also be stripped to increase the percentage of polymer solids.

Since the compositions produced herein contain two different polymers, they can be used to provide both a cationic and an anionic polymer or a high molecular weight polymer and a low molecular weight polymer substantially simultaneously for facilitating the separation of suspended solids from aqueous dispersions containing suspended solids. The advantage of this is that a single handling apparatus and single dosage point may be employed to use two different polymers.

An alternative method of practicing the present invention is to blend, substantially simultaneously into the aqueous medium to be treated, flocculating amounts of the one or more microemulsions with the secondary emulsion (s). For example, if one desired to use a multimodal emulsion or stabilized emulsion blend for flocculating municipal sludge, one could add the microemulsion(s) and second emulsion(s) substantially simultaneously into the sludge dispersion to be treated and mix the two or more emulsions within the dispersion. This may be less preferred.

Flocculating amount is the amount of emulsion or dilute aqueous solution for sufficiently flocculating suspended solids in an aqueous dispersion. That amount will depend upon the particular application and the severity of the problem addressed. For the flocculation of paper sludge or municipal sludge, for example, it is preferable to use an amount of emulsion or dilute aqueous solution capable of providing anywhere from 0.02 to 200 pounds total polymer per ton of dry sludge, more preferably from 1 to 100 pounds total polymer per ton of dry sludge. The appropriate dosage for each application may be easily ascertained by simple experimentation or from knowledge in the art.

The invention is illustrated by the Examples which follow.

Standard Viscosity (SV) is measured by adding 8 grams of a 0.2% aqueous polymer solution to 8.6 grams of a 2N NaCl aqueous solution, stirring the resulting mixture for 5 minutes to dissolve the salt, adjusting the pH to 5.5 for cationic polymers and 8 for anionic polymers and determining the viscosity at 25°C with a Brookfield viscometer (LVT model) with UL adapter at 60 rpm.

Examples 1-12 illustrate the preparation of a variety of polymeric compositions in an inverse microemulsion formulation.

**Example 1**

**Preparation of Poly(acrylamide) Inverse Microemulsion**

To 2236 g of an organic solution containing 1820 g of low odor paraffin oil, 290 g of Polyoxyethylene sorbitol fatty acid ester and 126 g of Sorbitan sesquioleate is slowly added 2208.9 g of a pH=3 aqueous solution containing 1000 g acrylamide (AMD) 60 g of acetic acid, 2 g of isopropanol, 20.1 g of ethylenediaminetetraacetic acid tetra sodium salt, 1.5 g of sodium bromate, 1.4 g of sulfuric acid and 1123.9 g of water. The resulting monomer emulsion is sparged for 60 minutes with nitrogen. $SO_2$ gas is then bubbled through the emulsion at a rate maintaining the rate of temperature increase around 2°C/min. allowing a maximum batch temperature of 65°C. Once the AMD conversion is greater than 99% the batch is cooled to 30°C. The result is a clear, stable PAM microemulsion having a SV between 3.0 and 4.0 cps.

**Example 2**

**Preparation of N,N-Dimethylaminomethanol (DMAM-S)**

Paraformaldehyde 450 g (92 %, 414 g real) is slowly added to an aqueous dimethylamine solution containing 640 g of real dimethylamine and 427 g water while maintaining the temperature below 30°C until the solids dissolve. Dicyanamide 60 g and 70 g of sodium metabisulfite and 378 g of $H_2O$ are added maintaining the temperature below 35°C affording DMAM-S.

**Example 3**

**Preparation of PAM-Mannich -75 Inverse Microemulsion**

4425.4 g of PAM microemulsion of Example 1 is placed in a reaction vessel at ambient temperature. To this are slowly added 885.0 g of low odor paraffin oil followed by 2025 g of DMAM-S of Example 2, the DMAM-S being added over a 1.5 hour period maintaining the temperature between 30-35°C. The resulting PAM-Mannich microemulsion is stirred at this temperature for an additional 16 hours. The resulting PAM-Mannich, 7335.4 g is obtained as an opaque microemulsion.

**Example 4**

**Quaternization of PAM-Mannich Microemulsion of Example #3**

7025.4 g of PAM-Mannich of Example 3 is placed in a stirred pressure reactor and the temperature adjusted to 25°C. To this is added 839 g of methyl chloride at a rate sufficient to maintain the temperature below 32°C and the reactor pressure below 30 psi. The resulting microemulsion is stirred at this temperature for an additional 18 hours. After this time, the pH of the emulsion is between 5 and 6 and the excess methyl chloride removed. To the resulting microemulsion is added 140 g of a 23% sodium metabisulfite solution followed by 253 g of ethoxylated nonylphenol. The resulting product is a clear, stable quaternized Mannich PAM microemulsion having an average of 75±5 % cationic charge as measured by infrared spectroscopy.

**Example 5**

**Heat Treatment of Microemulsion of**

**Example 4**

8519.6 g of the Quaternized PAM-Mannich Microemulsion of Example 4 is placed in a reaction vessel at ambient temperature. To this is slowly added with stirring 453.4 g of low odor paraffin oil and 668.9 g of buffer solution, which consists of 66.2 g of urea, 111.6 g of 88.5% lactic acid and 491.1 g of water. The resulting mixture is heated to 67°C and maintained for 9 hours with agitation. The resulting product is an opaque microemulsion.

**Example 6**

**Preparation of PAM-Mannich-55 Inverse Microemulsion**

4425.4 g of PAM microemulsion of Example 1 is placed in a reaction vessel at ambient temperature. To this are slowly added 885.0 g of low odor paraffin oil followed by 1420.0 g of DMAM-S of Example 2, the DMAM-S being added over a 1.5 hour period maintaining the temperature between 30-35°C. The resulting PAM-Mannich microemulsion is stirred at this temperature for an additional 16 hours. The resulting PAM-Mannich, 6730.4 g is an opaque microemulsion.

**Example 7**

**Quaternization of PAM-Mannich Microemulsion of Example 6**

6700.0 g of PAM-Mannich of Example 6 is placed in a stirred pressure reactor and the temperature adjusted to 25°C. To this is added 645.9 g of methyl chloride at a rate maintaining the temperature below 32°C and the reactor pressure below 30 psi. The resulting microemulsion is stirred at this temperature for an additional 18 hours. After this time, the pH of the emulsion is between 5 and 6 and the excess methvl chloride removed. To the resulting microemulsion is added 215.9 g of ethoxylated nonylphenol. The resulting product is a clear, stable quaternized Mannich PAM microemulsion having an average of 55±5 % cationic charge as measured by infrared spectroscopy.

**Example 8**

**Heat Treatment of Quaternized PAM-Mannich Microemulsion of**

7197.0 g of the Quaternized PAM-Mannich Microemulsion of Example 7 is placed in a reaction vessel at ambient temperature. To this is slowly added with stirring 453.4 g of low odor paraffin oil and 2032.6 g of buffer solution, which consists of 70.6 g of urea, 93.5 g of 88.5% lactic acid and 1868.5 g of water. The resulting mixture is heated to 67°C and maintained for 9 hours with agitation. The resulting product is an opaque microemulsion.

**Example 9**

**Preparation of Ammonium Acrylate/Acrylamide Copolymer Microemulsion.**

An organic solution is prepared by combining a low odor paraffin oil (252.0 g), sorbitan sesquioleate (8.5 g)

and polyoxyethylene sorbitol fatty acid (39.5 g) in a reactor with stirring. To this solution is added an aqueous solution of pH = 8.0 containing acrylamide (84.0 g), acrylic acid (36.0 g) neutralized with aqueous ammonium hydroxide (35.7 g), tert-butyl hydroperoxide (0.048 g), ethylenediaminetetraacetic acid tetra sodium salt (0.24 g), and water (144.0 g). The reactor is sealed and sparged with nitrogen for 30 minutes. Sulfur dioxide gas is then bubbled in to the emulsion at rate so as to maintain a temperature rise of around 2.0°C/min. The sulfur dioxide flow rate is maintained until the combined acrylic acid/acrylamide conversion is greater than 99%.

**Example 10**

**Preparation of 2-Acrylamido-2-Methyl-1-Propanesulfonic Acid Sodium Salt/Acrylamide Copolymer Microemulsion.**

An organic solution is prepared by combining a low odor paraffin oil (252.0 g), sorbitan sesquioleate (6.0 g) and polyoxyethylene sorbitol fatty acid (42.0 g) in a reactor with stirring. To this solution is added an aqueous solution containing acrylamide (50.8 g), 2-acrylamido-2-methyl-1-propanesulfonic acid sodium salt (69.2 g), tert-butyl hydroperoxide (0.048 g), ethylenediaminetetraacetic acid tetra sodium salt (0.24 g), and water (179.7 g).

The reactor is sealed and sparged with nitrogen for 30 minutes. Sulfur dioxide gas is then bubbled in to the emulsion at rate so as to maintain a temperature rise of around 2.0°C/min. The sulfur dioxide flow rate is maintained until the combined acrylamido-2-methyl-1-propanesulfonic acid sodium salt/acrylamide conversion is greater than 99 %.

**Example 11**

**Preparation of Acryloyloxyethyltrimethylammonium-Chloride/Acrylamide Copolymer Microemulsion.**

An organic solution is prepared by combining a low odor paraffin oil (208.4 g), polyoxyethylene sorbitan monooleate (9.0 g) and polyoxyethylene sorbitan trioleate (32.6 g) in a reactor with stirring. To this solution is added an aqueous solution, adjusted to pH = 3.5 with sulfuric acid, containing acrylamide (24.0 g), acryloxyethyltrimethyl ammonium chloride (80.2 g), sodium bromate (0.01 g), ethylenediaminetetraacetic acid tetra sodium salt (0.21 g), and water (145.58 g). The reactor is sealed and sparged with nitrogen for 30 minutes. Sulfur dioxide gas is then bubbled into the emulsion at rate so as to maintain a temperature rise of around 2.0 C/min. The sulfur dioxide flow rate is maintained until the combined 2-acrylamido-2-methyl-1-propanesulfonic acid sodium salt/acrylamide conversion is greater than 99 %.

**Example 12**

**Preparation of Diallyldimethylammonium Chloride/Acrylamide Copolymer Microemulsion.**

An organic solution is prepared by combining a low odor paraffin oil (240.0 g), polyoxyethylene sorbitan monooleate (10.0 g) and polyoxyethylene sorbitol fatty acid (50.0 g) in a reactor with stirring. To this solution is added an aqueous solution of pH = 2.9 containing acrylamide (33.8 g), diallyldimethylammonium chloride (50.7 g), N-(2-hydroxyethyl) ethylenediaminetriacetic acid (0.25 g), ammonium persulfate (0.0032 g) and water (115.9 g).

The reactor is sealed and sparged with nitrogen for 30 minutes. A solution of ferrous ammonium sulfate hexahydrate (0.45 wt % in water) is added at a rate so as to maintain a reaction temperature of 30-35°C. The ferrous ammonium sulfate hexahydrate flow rate is maintained for 20 hours.

Examples 13-25 illustrate the preparation of a variety of polymeric compositions in an inverse macroemulsion formulation.

**Examples 13-15**

**Preparation of Acrylamide/Acryloxyethyltrimethyl Ammonium Chloride Inverse Emulsion Polymers**

General polymerization procedure. AMD, acryloxyethyltrimethylammonium chloride, ammonium sulfate, glutaric acid solution, ethylenediaminetetraacetic acid tetra sodium salt solution, isopropanol, tert-butyl hydroperoxide solution, and DI water are combined and the pH adjusted to 3.5 with sulfuric acid. Sorbitan monooleate is combined with low odor paraffin oil . The aqueous solution is slowly added to the oil solution and the combined mixture homogenized until a viscosity of 1200-1500 cps is obtained. The emulsion is sparged with nitrogen. The emulsion is heated to 40°C. The metabisulfite (MBS) solution is added at a rate to keep the reaction temperature between 40-45°C. This

is maintained until the reaction conversion is at least 99%.

TABLE 1

| Components | Ex. 13 20% Charge | Ex. 14 40% Charge | Ex. 15 55% Charge |
|---|---|---|---|
| **Oil Phase** | | | |
| Oil | 176.50 g | 176.50 g | 173.40 g |
| Sorbitan monooleate | 17.90 g | 17.90 g | 21.00 g |
| **Aqueous Phase** | | | |
| AMD (50% soln.) | 249.82 g | 179.02 g | 138.8 g |
| Acryloxyethyltrimethyl ammonium chloride (80% soln.) | 106.20 g | 169.04 g | 289.50 g |
| Ammonium sulfate | 4.10 g | 4.10 g | 4.10 g |
| Glutaric acid (50% soln.) | 29.40 g | 29.40 g | 36.12 g |
| ethylenediaminetetr a acetic acid tetra sodium salt (5% soln.) | 3.92 g | 4.90 g | 6.00 g |
| Isopropanol | 4.20 g | 3.15 g | 0.75 g |
| tert-butyl hydroperoxide | 0.50 g | 0.50 g | 3.20 g |
| De-ionized water | 92.46 g | 100.49 g | 12.11 g |

**Examples 16-18**

**Preparation of Acrylamide/Acryloxyethyltrimethyl Ammonium Chloride Inverse Emulsion Polymers**

General polymerization procedure. The aqueous phase components listed below are combined and the pH adjusted to 3.5 with sulfuric acid. The sorbitan monooleate is combined with low odor paraffin oil. The aqueous phase is slowly added to the oil phase and the combined mixture homogenized until a viscosity of 1200-1500 cps is obtained. The emulsion is sparged with nitrogen and heated to 40°C. 15 mL of a 0.8 wt% sodium metabisulfite solution in deionized (DI) $H_2O$ is prepared and sparged with nitrogen. The sodium metabisulfite is added to the polymerization mixture at a rate sufficient to maintain the temperature of the mixture between 40-45°C. This is maintained until the reaction conversion is at least 99%. At the completion of the polymerization 10.0 g of a 30% wt. % solution of sodium metabisulfite in DI $H_2O$ is added to the emulsions containing polymer having 1 and 5% charge over 15 minutes.

TABLE 2

| Components | Ex. 16 1% Charge | Ex. 17 5% Charge | Ex. 18 10% Charge |
|---|---|---|---|
| **Oil Phase** | | | |
| Oil | 176.50 g | 176.50 g | 176.50 g |
| Sorbitan monooleate | 17.90 g | 17.90 g | 17.90 g |
| **Aqueous Phase** | | | |
| AMD (50% soln.) | 354.25 g | 371.28 g | 354.00 g |
| Acryloxyethyltrimethyl ammonium chloride (80% soln.) | 6.10 g | 33.33 g | 67.13 g |
| Ammonium sulfate | 0.00 g | 0.00 g | 4.10 g |
| Glutaric acid (50% soln.) | 25.47 g | 25.47 g | 27.70 g |
| ethylenediaminetetra acetic acid tetra sodium salt (5% soln.) | 4.25 g | 4.25 g | 0.00 g |
| Pentasodium diethylenetriamine pentaacetic acid (40% soln.) | 0.00 g | 0.00 g | 0.58 g |

TABLE 2 (continued)

| Components | Ex. 16 1% Charge | Ex. 17 5% Charge | Ex. 18 10% Charge |
|---|---|---|---|
| **Aqueous Phase** | | | |
| Isopropanol | 1.83 g | 2.12 g | 2.31 g |
| $NaBrO_3$ (2% soln.) | 0.00 g | 1.00 g | 2.10 g |
| tert-butyl hydroperoxide (2% soln.) | 1.00 g | 0.00 g | 0.00 g |
| De-ionized water | 86.78 g | 43.46 g | 32.68 g |

**Example 19**

**Preparation of 2-Acryloyloxyethyltrimethylammonium Chloride/Acrylamide Copolymer (45/55 mole %) Inverse Emulsion**

Polymerization Procedure

The oil phase and aqueous phase enumerated below are prepared separately. Thereafter they are combined and homogenized to yield a monomer emulsion. The monomer emulsion is purged with nitrogen and $SO_2$ is bubbled through the emulsion at a rate sufficient to bring the emulsion temperature up to and maintained at 40°C. This is continued until the polymerization is complete. The emulsion is cooled to room temperature and Ethoxylated alcohol - 60% EO is added with stirring.

| Oil Phase: | |
|---|---|
| Low odor paraffin oil | 177.20 g |
| Sorbitain monooleate | 8.10 g |
| Ethoxylated alcohol - 60% EO | 12.69 g |
| Total Oil Phase: | 197.99 g |
| Aqueous Phase: | |
| Acrylamide (52.77%) | 144.07 g |
| Acryloyloxyethyltrimethyl ammonium Chloride (80%) | 315.41 g |
| Pentasodium diethylenetriamine pentaacetic acid (40%) | 0.82 g |
| 2-Propanol | 1.12 g |
| Citric acid | 19.68 g |
| DI Water | 110.09 g |
| Sodium bromate (2.51%) | 0.65 g |
| Aqueous Ammonia (29%) | 2.16 g |
| Total Aqueous Phase (at pH 3.5): | 594.00 g |
| Total Monomer Emulsion: | 792.00 g |
| Ethoxylated alcohol - 60% EO | 8.00 g |
| Total Product Emulsion: | 800.00 g |

**Example 20**

**Preparation of Structured 2-Acryloxyethyltrimethylammonium Chloride/Acrylamide Copolymer (45/55 mole %) Inverse Emulsion**

Polymerization Procedure

The oil phase and aqueous phase enumerated below are prepared separately. Thereafter they are combined and homogenized to yield a monomer emulsion. The monomer emulsion is purged with nitrogen and $SO_2$ is bubbled

through the emulsion at a rate sufficient to bring the emulsion temperature up to and maintained at 40°C. This is continued until the polymerization is complete. The emulsion is cooled to room temperature and Malic acid and Ethoxylated alcohol - 60% EO are then added with stirring.

| Oil Phase: | |
|---|---|
| Low odor paraffin oil | 11939 g |
| N,N-bis-(2-hydroxyethyl)oleamide | 524 g |
| Ethoxylated alcohol - 60% EO | 402 g |
| Total Oil Phase: | 12865 g |
| Aqueous Phase: | |
| Acrylamide (50%) | 8844 g |
| Acryloxyethyltrimethyl ammonium Chloride (80%) | 18430 g |
| Ammonium sulfate | 250 g |
| Sulfuric acid (10%) | 230 g |
| Disodium EDTA dihydrate | 19 g |
| 2-Propanol | 245 g |
| Methylene bis(acrylamide) | 0.406 g |
| DI Water | 4021 g |
| t-butyl hydroperoxide (70%) | 0.478 g |
| Total Aqueous Phase (at pH 3.5): | 32039 g |
| Total Monomer Emulsion: | 44904 g |
| Malic acid (50%) | 2300 g |
| Ethoxylated alcohol - 60% EO | 209 g |
| Total Product Emulsion: | 47413 g |

**Example 21**

**Preparation of Acryloxyethyltrimethylammonium Chloride/Acrylamide Copolymer (10/90 mole %) Inverse Emulsion Containing Urea**

Polymerization Procedure

The oil phase and aqueous phase enumerated below are prepared separately. Thereafter they are combined and homogenized to yield a monomer emulsion. The monomer emulsion is purged with nitrogen and $SO_2$ is bubbled through the emulsion at a rate sufficient to bring the emulsion temperature up to and maintained at 40°C. This is continued until the polymerization is complete. The emulsion is cooled to room temperature and Malic acid and Ethoxylated alcohol - 60% EO are then added with stirring.

| Oil Phase: | |
|---|---|
| Low odor paraffin oil | 175.06 g |
| Sorbitain monooleate | 16.54 g |
| Ethoxylated alcohol - 60% EO | 4.00 g |
| Total Oil Phase: | 195.60 g |
| Aqueous Phase: | |
| Acrylamide (52.33%) | 387.14 g |
| Acryloyloxyethyltrimethyl ammonium Chloride (80%) | 76.76 g |
| Pentasodium diethylenetriamine pentaacetic acid (40%) | 1.32 g |
| 2-Propanol | 3.43 g |
| DI Water | 13.38 g |

(continued)

| Aqueous Phase: | |
|---|---|
| Urea | 65.20 g |
| Sodium bromate (2.51%) | 1.05 g |
| Sulfuric acid (conc.) | 0.52 g |
| Total Aqueous Phase (at pH 3.5): | 518.00 g |
| Total Monomer Emulsion: | 713.60 g |
| Malic acid (50%) | 68.80 g |
| Ethoxylated alcohol - 60% EO | 17.60 g |
| Total Product Emulsion: | 832.80 g |

**Example 22**

**Preparation of Diallyldimethylammonium Chloride Inverse Emulsion**

Polymerization Procedure

The oil phase and aqueous phase are prepared separately. Thereafter they are combined and homogenized to yield a monomer emulsion. 1.28 g of 2,2'-azobis (2,4-dimethylvaleronitrile) (Vazo-52) in 10 mL of toluene are added and the monomer emulsion is purged with nitrogen. The emulsion is heated and maintained at 60°C for 7 hours after which time the resulting emulsion is cooled to room temperature.

| Oil Phase: | |
|---|---|
| Low odor paraffin oil | 177.21 g |
| Sorbitain monooleate | 8.10 g |
| Ethoxylated alcohol - 60% EO | 12.69 g |
| Total Oil Phase: | 198.00 g |
| Aqueous Phase: | |
| Diallyldimethylammonium chloride (60%) | 533.33 g |
| Pentasodium diethylenetriamine pentaacetic acid (40%) | 1.60 g |
| DI Water | 59.07 g |
| Total Aqueous Phase: | 594.00 g |
| Total Monomer Emulsion: | 792.00 g |

**Example 23**

**Preparation of Ammonium Acrylate/Acrylamide Copolymer (30/70 mole %) Inverse Emulsion**

Polymerization Procedure

The oil phase and aqueous phase enumerated below are prepared separately. Thereafter they are combined and homogenized to yield a monomer emulsion. The monomer emulsion is purged with nitrogen and $SO_2$ is bubbled through the emulsion at a rate sufficient to bring the emulsion temperature up to and maintained at 40°C. This is continued until the polymerization is complete. The emulsion is cooled to room temperature and the sodium metabisulfite solution and Ethoxylated alcohol - 60% EO are added with stirring.

| Oil Phase: | |
|---|---|
| Low odor paraffin oil | 162.57 g |
| Sorbitain monooleate | 14.64 g |
| Ethoxylated alcohol - 60% EO | 5.68 g |
| Total Oil Phase: | 182.89 g |

(continued)

| Aqueous Phase: | |
|---|---|
| Acrylamide (52.77%) | 348.72 g |
| Acrylic acid (glacial) | 79.98 g |
| Lactic acid (85%) | 0.62 g |
| Pentasodium diethylenetriamine pentaacetic acid (40%) | 0.53 g |
| t-butyl hydroperoxide (3.01%) | 0.54 g |
| Aqueous Ammonia (29%) | 66.30 g |
| DI Water | 89.12 g |
| Total Aqueous Phase (at pH 7.5): | 585.81 g |
| Total Monomer Emulsion: | 768.70 g |
| Sodium metabisulfite (30%) | 17.12 g |
| Ethoxylated alcohol - 60% EO | 14.00 g |
| Total Product Emulsion: | 799.82 g |

**Example 24**

**Preparation of Ammonium Acrylate/Acrylamide Copolymer (30/70 mole %) Inverse Emulsion**

Polymerization Procedure

The oil and surfactants are combined. In a separate vessel the acrylamide and glacial acrylic acid are combined and cooled with an ice bath to approximately 10°C. The aqueous ammonia is added slowly to pH 7.0, while maintaining the monomer solution temperature below 35°C with the use of the ice bath. The lactic acid, ethylenediaminetetraacetic acid disodium salt solution and deionized water are added to the monomer solution. The aqueous phase is slowly added to the oil phase and homogenized until a viscosity of 1200-2000 cps is achieved. The emulsion is placed in a water bath at 40°C and the t-butyl hydroperoxide solution is added. The emulsion is purged with nitrogen for 15 minutes. 20 mL of a solution of sodium metabisulfite (MBS), 0.2 % in deionized water is prepared and purged with nitrogen. The MBS solution is added at a rate sufficient to increase the reaction temperature to 50°C within 30-50 minutes. The remainder of the MBS solution is added at a rate to maintain 50°C until the polymerization is complete. The reaction is allowed to cool to room temperature and the aqueous ammonia, sodium metabisulfite and Ethoxylated alcohol - 60% EO are added sequentially, each over a 30 minute period with stirring.

| Oil Phase: | |
|---|---|
| Low odor paraffin oil | 145.09 g |
| N,N-bis-(2-hydroxyethyl)oleamide | 12.60 g |
| Ethoxylated alcohol - 60% EO | 1.40 g |
| Total Oil Phase: | 159.09 g |
| Aqueos Phase: | |
| Acrylamide (50.0%) | 334.18 g |
| Acrylic acid (glacial) | 72.62 g |
| Lactic acid (85%) | 0.56 g |
| ethylenediamine tetraacetic acid disodium salt (10% soln.) | 7.42 g |
| Aqueous Ammonia (29% soln.) | 67.20 g |
| t-butyl hydroperoxide (1.48 %) | 1.00 g |
| DI Water | 57.93 g |
| Total Aqueous Phase (at pH 7.5): | 540.91 g |
| Total Monomer Emulsion: | 700.00 g |
| Aqueous Ammonia (30%) | 5.60 g |

(continued)

| Aqueos Phase: | |
|---|---|
| Sodium metabisulfite (30%) | 17.12 g |
| Ethoxylated alcohol - 60% EO | 14.00 g |
| Total Product Emulsion: | 736.72 g |

**Example 25**

**Preparation of 2-Acrylamido-2-Methyl-1-Propanesulfonic Acid Sodium Salt/Acrylamide Copolymer Inverse Emulsion**

Polymerization Procedure

The oil phase and aqueous phase enumerated below are prepared separately. Thereafter they are combined and homogenized to yield a monomer emulsion. The monomer emulsion is purged with nitrogen and $SO_2$ is bubbled through the emulsion at a rate sufficient to bring the emulsion temperature up to and maintained at 40°C. This is continued until the polymerization is complete. The emulsion is cooled to room temperature and Ethoxylated alcohol - 60% EO is added with stirring.

| Oil Phase: | |
|---|---|
| Low odor paraffin oil | 175.87 g |
| Sorbitain monooleate | 14.74 g |
| Ethoxylated alcohol - 60% EO | 5.89 g |
| Total Oil Phase: | 196.50 g |
| Aqueous Phase: | |
| Acrylamide (52.89%) | 249.57 g |
| 2-Acrylamido-2-Methyl-1-Propanesulfonic Acid Sodium Salt (50%) | 264.00 g |
| 2-Propanol | 0.26 g |
| Pentasodium diethylenetriamine pentaacetic acid (40%) | 1.32 g |
| t-butyl hydroperoxide (3.01%) | 1.32 g |
| Sulfuric acid (conc.) | 0.13 g |
| DI Water | 72.90 g |
| Total Aqueous Phase (at pH 7.0-7.2): | 589.50 g |
| Total Monomer Emulsion: | 786.00 g |
| Ethoxylated alcohol - 60% EO | 14.00 g |
| Total Product Emulsion: | 800.00 g |

Examples 26-52 and 53-72 illustrate the preparation of a variety of multimodal emulsion blends arrived at by mixing a microemulsion and a macroemulsion. The data in Table 3 shows various emulsion blends made from a macroemulsion having a cationic functionality of 10 mole percent, based on monomer, and a polymeric microemulsion having a cationic functionality of 75 mole percent, based on monomer. The data for Examples 53-72 in Table 4 shows that a desired overall charge may be obtained by blending polymeric microemulsions and macroemulsions having a variety of different charges. The data in Tables 3 and 4 shows that one can, by using the process of the instant invention and varying the proportions of microemulsion and macroemulsion having certain percentage cationic functionality, easily obtain a stable emulsion blend having a desired charge. Moreover, by varying the standard viscosity of the microemulsions and macroemulsions that are blended, one can easily obtain a multimodal blend having a desired standard viscosity. A flexible process for obtaining polymeric emulsions having a desired overall charge and standard viscosity is valuable because polymer flocculation performance is known to be affected by polymer charge and standard viscosity.

**Example 26-52**

**Preparation of Blends**

General procedure:

Polymers

The microemulsions are prepared according to Examples 1-5. The different polymer SVs are achieved by varying the amount of isopropanol used to prepare the PAM microemulsion of Example 1. The macroemulsions are prepared according to Example 18. The different polymer SVs are prepared by varying the amount of isopropanol added to the emulsion polymerization. The SV of the blend is as expected from a weighed average of the component polymers.

Blend Preparation

The appropriate amount of the inverse macro-emulsion is weighed into a beaker. The appropriate amount of a 50 wt. % aqueous solution of stabilizer is added to the emulsion over a period of 5 minutes with stirring. The inverse micro-emulsion is then added over 5 minutes and the resulting blend is stirred for 30 minutes.

# TABLE 3

| Blend Example | Blend Charge | Urea[1] Content (wt.%) | Blend SV[2] (cps) | Macro emulsion Charge[3] | Macro emulsion SV (cps) | Macro emulsion wt. (g) | Urea 50% soln.(g) | Micro emulsion Charge | Micro emulsion SV (cps) | Micro emulsion wt.(g) |
|---|---|---|---|---|---|---|---|---|---|---|
| 26 | 55 | 1.5 | 2.9 | 10 | 4.0 | 18.2 | 3.1 | 75 | 2.9 | 81.8 |
| 27 | 55 | 1.5 | 2.8 | 10 | 4.0 | 18.2 | 3.1 | 75 | 2.5 | 81.8 |
| 28 | 55 | 1.5 | 2.6 | 10 | 4.0 | 18.2 | 3.1 | 75 | 2.3 | 81.8 |
| 29 | 55 | 1.5 | 2.7 | 10 | 2.8 | 18.2 | 3.1 | 75 | 2.9 | 81.8 |
| 30 | 55 | 1.5 | 2.6 | 10 | 2.8 | 18.2 | 3.1 | 75 | 2.5 | 81.8 |
| 31 | 55 | 1.5 | 2.5 | 10 | 2.8 | 18.2 | 3.1 | 75 | 2.3 | 81.8 |
| 32 | 55 | 1.5 | 2.6 | 10 | 2.2 | 18.2 | 3.1 | 75 | 2.9 | 81.8 |
| 33 | 55 | 1.5 | 2.4 | 10 | 2.2 | 18.2 | 3.1 | 75 | 2.5 | 81.8 |
| 34 | 55 | 1.5 | 2.3 | 10 | 2.2 | 18.2 | 3.1 | 75 | 2.3 | 81.8 |
| 35 | 35 | 2.0 | 3.1 | 10 | 4.0 | 14.0 | 1.43 | 75 | 2.9 | 20.3 |
| 36 | 35 | 2.0 | 3.1 | 10 | 4.0 | 14.0 | 1.43 | 75 | 2.5 | 20.3 |
| 37 | 35 | 2.0 | 3.0 | 10 | 4.0 | 14.0 | 1.43 | 75 | 2.3 | 20.3 |
| 38 | 35 | 2.0 | 2.8 | 10 | 2.8 | 14.0 | 1.43 | 75 | 2.9 | 20.3 |
| 39 | 35 | 2.0 | 2.7 | 10 | 2.8 | 14.0 | 1.43 | 75 | 2.5 | 20.3 |
| 40 | 35 | 2.0 | 2.7 | 10 | 2.8 | 14.0 | 1.43 | 75 | 2.3 | 20.3 |

TABLE 3 ... continued

| Blend Example | Blend Charge | Urea[1] Content (wt.%) | Blend SV[2] (cps) | Macro emulsion Charge[3] | Macro emulsion SV (cps) | Macro emulsion wt. (g) | Urea 50% soln.(g) | Micro emulsion Charge | Micro emulsion SV (cps) | Micro emulsion wt.(g) |
|---|---|---|---|---|---|---|---|---|---|---|
| 41 | 35 | 2.0 | 2.4 | 10 | 2.2 | 14.0 | 1.43 | 75 | 2.9 | 20.3 |
| 42 | 35 | 2.0 | 2.3 | 10 | 2.2 | 14.0 | 1.43 | 75 | 2.5 | 20.3 |
| 43 | 35 | 2.0 | 2.3 | 10 | 2.2 | 14.0 | 1.43 | 75 | 2.3 | 20.3 |
| 44 | 20 | 1.5 | 3.0 | 10 | 4.0 | 26.6 | 3.1 | 75 | 2.9 | 73.4 |
| 45 | 20 | 1.5 | 2.8 | 10 | 4.0 | 26.6 | 3.1 | 75 | 2.5 | 73.4 |
| 46 | 20 | 1.5 | 2.6 | 10 | 4.0 | 26.6 | 3.1 | 75 | 2.3 | 73.4 |
| 47 | 20 | 1.5 | 2.8 | 10 | 2.8 | 26.6 | 3.1 | 75 | 2.9 | 73.4 |
| 48 | 20 | 1.5 | 2.7 | 10 | 2.8 | 26.6 | 3.1 | 75 | 2.5 | 73.4 |
| 49 | 20 | 1.5 | 2.5 | 10 | 2.8 | 26.6 | 3.1 | 75 | 2.3 | 73.4 |
| 50 | 20 | 1.5 | 2.7 | 10 | 2.2 | 26.6 | 3.1 | 75 | 2.9 | 73.4 |
| 51 | 20 | 1.5 | 2.4 | 10 | 2.2 | 26.6 | 3.1 | 75 | 2.5 | 73.4 |
| 52 | 20 | 1.5 | 2.3 | 10 | 2.2 | 26.6 | 3.1 | 75 | 2.3 | 73.4 |

[1] Urea added to macroemulsion (wt.% based on emulsion blend)
[2] Standard Viscosity is measured centipoise (cps)
[3] Cationic functionality (mole % based on monomer)

**Example 53-72**

**Preparation of Blends at 55% Charge**

These examples demonstrate the versatility of the process of the instant invention for blending a variety of two differently charged emulsions. It is possible to prepare blends having a desired charge from a variety of component polymers. To compensate for the charge on the component polymers, one simply varies the relative amounts of macroemulsion and microemulsion. For the blends below the appropriate amounts of a 50% aqueous urea solution was added dropwise to the macroemulsion with stirring. The microemulsion was then added to the mixture with stirring. The different polymer SVs are achieved by varying the amount of isopropanol use to prepare the microemulsions and macroemulsions. The SV of the blend is as expected from a weighted average of the component polymers.

## TABLE 4

| Blend Example | Blend Charge[1] | Urea[2] Content (wt.%) | Blend SV[3] (cps) | Macro Emulsion of Example | Macro emulsion SV (cps) | Macro emulsion weight (g) | Urea 50% soln. (g) | Micro emulsion of Example | Micro emulsion SV (cps) | Micro emulsion weight (g) |
|---|---|---|---|---|---|---|---|---|---|---|
| 53 | 55 | 2.5 | 2.7 | 17 | 3.8 | 2.9 | 1.0 | 5 | 2.5 | 15.9 |
| 54 | 55 | 2.5 | 2.2 | 13 | 2.2 | 4.5 | 1.0 | 5 | 2.9 | 13.9 |
| 55 | 55 | 2.5 | 2.5 | 18 | 2.9 | 3.1 | 1.0 | 5 | 2.9 | 15.3 |
| 56 | 55 | 2.5 | 2.1 | 13 | 2.2 | 4.5 | 1.0 | 5 | 2.0 | 13.9 |
| 57 | 55 | 2.5 | 2.4 | 13 | 2.2 | 4.5 | 1.0 | 5 | 2.5 | 13.9 |
| 58 | 55 | 2.5 | 2.3 | 13 | 2.4 | 4.5 | 1.0 | 5 | 2.0 | 13.9 |
| 59 | 55 | 2.5 | 2.1 | 17 | 2.1 | 2.9 | 1.0 | 5 | 2.0 | 15.8 |
| 60 | 55 | 2.5 | 2.1 | 13 | 2.2 | 4.5 | 1.0 | 5 | 2.0 | 13.9 |
| 61 | 55 | 2.5 | 2.8 | 13 | 3.4 | 4.5 | 1.0 | 5 | 2.9 | 13.9 |
| 62 | 55 | 2.5 | 2.2 | 18 | 3.4 | 3.1 | 1.0 | 5 | 2.0 | 15.3 |
| 63 | 55 | 2.5 | 2.5 | 18 | 2.9 | 3.1 | 1.0 | 5 | 2.5 | 15.3 |
| 64 | 55 | 2.5 | 2.4 | 18 | 2.2 | 3.1 | 1.0 | 5 | 2.9 | 15.3 |
| 65 | 55 | 2.5 | 2.8 | 13 | 3.4 | 4.5 | 1.0 | 5 | 2.9 | 13.9 |
| 66 | 55 | 2.5 | 2.1 | 18 | 2.1 | 3.1 | 1.0 | 5 | 2.0 | 15.3 |

| Blend Example | Blend Charge[1] | Urea[2] Content (wt.%) | Blend SV[3] (cps) | Macro Emulsion of Example | Macro emulsion SV (cps) | Macro emulsion weight (g) | Urea 50% soln. (g) | Micro emulsion of Example | Micro emulsion SV (cps) | Micro emulsion weight (g) |
|---|---|---|---|---|---|---|---|---|---|---|
| 67 | 55 | 2.5 | 2.6 | 17 | 2.9 | 2.9 | 1.0 | 5 | 2.9 | 15.8 |
| 68 | 55 | 2.5 | 2.4 | 18 | 3.4 | 3.1 | 1.0 | 5 | 2.0 | 15.3 |
| 69 | 55 | 2.5 | 2.5 | 17 | 2.1 | 2.9 | 1.0 | 5 | 2.9 | 15.8 |
| 70 | 55 | 2.5 | 2.7 | 18 | 3.3 | 3.1 | 1.0 | 5 | 2.9 | 15.3 |
| 71 | 55 | 2.5 | 2.2 | 17 | 3.8 | 2.9 | 1.0 | 5 | 2.0 | 15.8 |
| 72 | 55 | 2.5 | 2.9 | 17 | 3.8 | 2.9 | 1.0 | 5 | 2.9 | 15.8 |

[1] Cationic functionality (mole % based on monomer)
[2] *Urea added to macroemulsion (wt. % based on emulsion blend)*
[3] Standard Viscosity is measured in centipoise (cps)

Examples 73-93 demonstrate the utility of adding a stabilizer to blends of the current invention.

**Examples 73-79**

**Stabilization of 40% Charge blends by addition of urea**

Blends having an overall charge of 40% are prepared from 66.58 g of the microemulsion of Example 5 and

35.64 g of the macroemulsion of Example 18. For the samples containing urea, the appropriate amount of a 50% aqueous urea solution is added to the macroemulsion with stirring. The microemulsion was then added to this mixture with stirring to yield a stabilized blend. The resulting blends are stored at room temperature for the time periods indicated. Samples of the blends are withdrawn and the SV of the blend was measured.

TABLE 5

| Example | Urea[1] Content (wt.%) | Days @ 25°C | Standard Viscosity (SV) (cps) |
|---|---|---|---|
| 73* | 0 | 0 | 2.8 |
| | | 7 | 1.9 |
| | | 65 | 1.9 |
| 74 | 1.25 | 0 | 2.6 |
| | | 65 | 2.8 |
| 75 | 2.50 | 0 | 2.4 |
| | | 65 | 2.4 |
| 76 | 3.75 | 0 | 2.6 |
| | | 65 | 2.6 |
| 77 | 5.0 | 0 | 3.0 |
| | | 65 | 3.4 |
| 78 | 10.0 | 0 | 2.9 |
| | | 42 | 3.1 |

[1] Urea Added to Macroemulsion (wt.% based on emulsion blend)

* Not representative of the invention for stable emulsion blends

The data in Table 5 demonstrates that when a microemulsion containing quaternized Mannich PAM, which has been heat treated with acid and a formaldehyde scavenger, is blended with a macroemulsion comprising acrylamide/acryloxyethyltrimethyl ammonium halide copolymer (Example 18), the polymer in the resulting blend does not remain stable or loses it's ability to achieve the original standard viscosity of the fresh blend. But when an aldehyde scavenger (urea) is added to the macroemulsion prior to blending, the polymer in the blend remains stable. It is known that the standard viscosity of a polymer affects flocculation performance, as shown in Table 6, which provides sludge dewatering data for some of the emulsion blends tested in Table 5. The data in Table 6 demonstrates that the addition of a stabilizer to the blend allows the stabilized blend to maintain its performance efficacy while the unstabilized blend performance deteriorates substantially with time.

The efficiency of dewatering a typical municipal sludge is determined for Examples 73, 77 and 78 in Table 6 as follows: 200 gms of sludge are carefully weighed into a beaker. Aqueous solutions of the polymers and blends are prepared by adding the polymer emulsion sample to water so that the polymer concentration is 0.2 weight percent. Various doses of the polymer solution are added to the sludge samples, water is added to bring the total weight to 250 gms, the mixture is agitated at 1000 rpm for 5 seconds and the resulting flocculated sludge is poured through a Buchner funnel containing a 60 mesh screen. The free drainage is measured by recording the volume of filtrate collected in 10 seconds. The resulting flocculated sludge is further dewatered by pressing the sample under identical conditions. The pressed sludge is then dried to constant weight to determine the final sludge solids content, i.e. the cake solids.

TABLE 6

| Example | Urea Content (wt. %) | Age (stored at room temp.) | Dose (lb/ton) | Filtrate (mL) | Cake Solids (%) |
|---|---|---|---|---|---|
| 73* | 0 | fresh | 10.4 | 55 | --- |
| | | | 12.2 | 71 | 20.5 |
| | | | 13.2 | 85 | 20.6 |
| | | | 14.1 | 87 | 17.6 |
| 73* | 0 | 6 weeks | 14.1 | 45 | --- |
| | | | 18.8 | 93 | 19.6 |
| | | | 19.8 | 65 | 19.5 |
| | | | 20.7 | 74 | --- |
| | | | 23.5 | 75 | --- |
| 77 | 5 | 6 weeks | 9.4 | 53 | --- |
| | | | 10.4 | 68 | 17.6 |
| | | | 11.3 | 48 | 12.9 |
| | | | 12.2 | 40 | --- |
| 78 | 10 | 6 Weeks | 10.35 | 66 | 18.3 |
| | | | 10.82 | 74 | 18.7 |
| | | | 11.29 | 62 | 18.0 |
| | | | 12.24 | 40 | --- |

[1] Urea added to macroemulsion (wt% based on blend)
* Not representative of the invention for stable emulsion blends

Table 7 shows data obtained from an accelerated aging study carried out at 50°C. This data correlates with the data of Table 5 and is therefore representative of room temperature aging studies.

TABLE 7

| Example | Urea added to[1] macroemulsion (wt.%) | Days @ 50°C | SV |
|---|---|---|---|
| 73* | 0 | 0 | 2.8 |
| | | 1 | 1.9 |
| | | 4 | 2.1 |
| 79 | 0.84 | 0 | 2.6 |
| | | 1 | 2.4 |
| | | 4 | 2.3 |
| | | 8 | 2.3 |
| 74 | 1.25 | 0 | 2.6 |
| | | 1 | 2.6 |
| | | 4 | 3.0 |
| | | 6 | 2.5 |
| | | 8 | 2.4 |

* Not representative of the invention for stable emulsion blends
[1] (wt % based on emulsion blend)

TABLE 7 (continued)

| Example | Urea added to[1] macroemulsion (wt.%) | Days @ 50°C | SV |
|---|---|---|---|
| 75 | 2.50 | 0 | 2.4 |
| | | 1 | 2.4 |
| | | 4 | 2.6 |
| | | 6 | 2.5 |
| | | 8 | 2.5 |
| | | 10 | 2.4 |
| | | 12 | 2.4 |
| 76 | 3.75 | 0 | 2.6 |
| | | 1 | 2.6 |
| | | 4 | 2.7 |
| | | 6 | 2.7 |
| | | 8 | 2.7 |
| 77 | 5.0 | 0 | 2.4 |
| | | 1 | 2.4 |
| | | 4 | 2.6 |
| | | 6 | 2.5 |

[1] (wt % based on emulsion blend)

**Examples 80-82**

**Method Of Stabilizing Blends By Adding Urea To The Monomer Aqueous Phase Of The Macroemulsion**

Blends are prepared by adding the indicated amounts of the macroemulsion of Example 21 and the microemulsion of Example 5 to a beaker. The blend is mixed for a few minutes with the aid of a magnetic stirring bar. The blends are then aged at 50°C for the indicated time periods. As indicated by the SV measurements, the urea in the macroemulsion is sufficient to stabilize the blends, as evidenced by no loss in SV over at least one week at 50°C. In contrast, the SV of a control blend (Example 82A), prepared identically except that no urea was added to the macroemulsion, dropped to 2.0 after aging for 1 day at 50°C.

TABLE 8

| Example | Macroemulsion of Example 21 (grams) | Microemulsion of Example 5 (grams) | Blend Charge | Urea[1] Content (wt. %) | Days at 50° | SV (cps) |
|---|---|---|---|---|---|---|
| 80 | 108.35 | 41.35 | 20 % | 5.6 | 0 | 2.87 |
| | | | | | 1 | 2.87 |
| | | | | | 4 | 2.79 |
| | | | | | 8 | 2.99 |
| | | | | | 11 | 3.21 |

[1] Urea added to macroemulsion (wt.% based on emulsion blend)

TABLE 8 (continued)

| Example | Macroemulsion of Example 21 (grams) | Microemulsion of Example 5 (grams) | Blend Charge | Urea[1] Content (wt. %) | Days at 50° | SV (cps) |
|---|---|---|---|---|---|---|
| 81 | 54.95 | 95.05 | 40 % | 2.9 | 0 | 2.82 |
| | | | | | 1 | 2.82 |
| | | | | | 4 | 2.77 |
| | | | | | 8 | 2.81 |
| | | | | | 11 | 2.84 |
| 82 | 19.42 | 80.58 | 55 % | 1.5 | 0 | 2.49 |
| | | | | | 1 | 2.45 |
| | | | | | 4 | 2.52 |
| | | | | | 8 | 2.35 |
| | | | | | 11 | 1.82 |
| 82A* | 19.42 (macroemulsion of Example 18) | 80.58 | 55% | 0 | 0 | 2.5 |
| | | | | | 1 | 2.0 |

[1] Urea added to macroemulsion (wt.% based on emulsion blend)

* Not representative of the invention for stable emulsion blend

**Examples 82A-C**

**Effect of Order of Addition of Blend Components on Blend Stability**

Stable emulsion blends were prepared at 55% overall charge by combining the microemulsion of Example 5 (80.6 g), the macroemulsion of Example 18 (19.4 g) and optionally a 50% aqueous urea solution (4.2 g). As shown in the Table 8A, the blends were prepared by adding either a microemulsion or macroemulsion to a vessel. To this was optionally added the aqueous urea solution over a period of 5 minutes with stirring. To this mixture the other emulsion was added and the resulting blend was stirred for 5 minutes. The control blend was unstable as evidenced by the loss in SV. Both of the stabilized blends maintained their SV after accelerated ageing. The data in Table A shows that the aldehyde scavenger may be added to either the microemulsion or the second emulsion (here macroemulsion) prior to blending the emulsions.

TABLE 8A

| Example Number | Urea Added (wt. % based on blend) | Order of Addition of Components | Original SV (cps) | SV after ageing 1 day at 50 |
|---|---|---|---|---|
| Control Example 82* | none | 1)Macroemulsion 2) Microemulsion | 2.6 | 2.1 |
| Example 82B | 2.0 | 1)Macroemulsion 2)Urea solution 3)Microemulsion | 2.6 | 2.7 |
| Example 82C | 2.0 | 1)Microemulsion 2)Urea solution 3)Macroemulsion | 2.7 | 2.7 |

* Not representative of the invention for stable emulsion blends

**Example 83**

Stabilization of Lower Charge Microemulsion Blends By Adding Urea

Blends are prepared by adding the indicated amounts of the macroemulsion of Example 18, the microemulsion of Example 8 and a 50% urea solution with stirring. The overall total charge of the emulsion blend has a 24 % cationic functionality, based on the monomer. The blends are then aged at 50°C for the indicated time periods. As indicated by the SV measurements, the urea is sufficient to stabilize the blends containing the lower charged quaternized Mannich PAM.

TABLE 9

| Example | Macroemulsion of Example 18 (grams) | Microemulsion of Example 8 (grams) | Urea 50 % soln. (grams) | Urea[1]Content (wt. %) | Days at 50°C | SV (cps) |
|---|---|---|---|---|---|---|
| 83 | 22.0 plus 0.5 g ethoxylate d alcohol - 60% EO | 22.5 | 5.0 | 5.0 | 0 | 2.9 |
| | | | | | 1 | 2.9 |
| | | | | | 4 | 2.8 |
| | | | | | 8 | 2.0 |

[1] Urea added to blend (wt% based on emulsion blend)

**Examples 84-87**

**Stabilization of the Macroemulsion of Example 18**

The effectiveness of the aldehyde scavenger can be predicted using the following test. To the macroemulsion of Example 18 is added either: a) a compound (formaldehyde or glyoxal), capable of affecting the ability of the (alk) acrylamide-based polymer to achieve a flocculation effective viscosity in water, or b) the formaldehyde or glyoxal compound in (a) plus an aldehyde scavenger (urea). The mixtures are then heated for a period of time, inverted and their standard viscosities are measured. The results indicate that an aldehyde scavenger is capable of stabilizing formulations containing (alk)acrylamide-based polymer and formaldehyde or glyoxal. Since glyoxalated (alk)acrylamide microemulsions contain or generate glyoxal, an aldehyde scavenger would stabilize a blend of at least one microemulsion containing glyoxalated (alk)acrylamide polymer and at least one second emulsion containing an (alk)acrylamide-based polymer.

TABLE 10

| Example | Active Species | Aldehyde Concentration (ppm based on polymer) | Stabilzer | Urea Concentration (wt. % based on emulsion) | Days @ 50°C | SV (cps) |
|---|---|---|---|---|---|---|
| 84* | Formaldehyde | 620 | None | - | 0 | 3.9 |
| | | | | | 3 | 1.7 |
| 85 | Formaldehye | 620 | Urea | 5 | 0 | 3.9 |
| | | | | | 3 | 3.8 |
| 86* | Glyoxal | 1350 | None | - | 0 | 4.2 |
| | | | | | 1 | 1.6 |
| 87 | Glyoxal | 1350 | Urea | 5 | 0 | 3.9 |
| | | | | | 1 | 4.2 |

* Not representative of the invention for stable emulsion blends

**Example 88**

**Stabilization of Blends of the Microemulsion of Example 4**

A stabilized blend is prepared by mixing 50g of the microemulsion of Example 4, 50g of the macroemulsion of Example 18 and 10g of a 50% urea solution. The blend is allowed to age at room temperature for one month. The blend is inverted and the SV was 2.6 cps at a solution pH of 7. This is essentially unchanged from the SV of the blend when prepared and illustrates that urea is effective at stablizing blends of the non-heat-treated microemulsion of Example 4.

**Examples 89-93**

**Stabilization of blends by addition of dimedone**

Blends having an overall cationic charge of 40% (mole percent, based on monomer) were prepared from 66.58 g of the microemulsion of Example 5 and 35.64 g of the macroemulsion of Example 18. For the samples containing dimedone, the appropriate amount of dimedone is added to the macroemulsion with stirring. The microemulsion was then added to this mixture with stirring to yield a stabilized blend. The resulting blends are stored at 50°C for the indicated time period. Samples of the blends are withdrawn and the SV of the blend is measured. The results indicated that dimedone (5,5-dimethyl-1,3-cyclohexyldione) is also effective at stabilizing the emulsion blends.

TABLE 11

| Example | Dimedone[1] (wt. %) | Days @ 50°C | SV |
|---|---|---|---|
| 89* | 0 | 0 | 2.8 |
| | | 1 | 1.9 |
| | | 4 | 1.9 |
| 90 | 1.25 | 0 | 2.6 |
| | | 1 | 2.6 |
| | | 4 | 2.6 |
| | | 6 | 3.0 |
| | | 8 | 2.5 |
| | | 14 | 2.4 |
| 91 | 2.50 | 0 | 2.4 |
| | | 1 | 2.4 |
| | | 4 | 2.4 |
| | | 6 | 2.6 |
| | | 8 | 2.5 |
| | | 10 | 2.5 |
| | | 12 | 2.4 |
| | | 16 | 2.4 |

[1]Dimedone added to macroemulsion (wt % based on emulsion blend)

*Not representative of the invention for stable emulsion blends

TABLE 11 (continued)

| Example | Dimedone[1] (wt. %) | Days @ 50°C | SV |
|---|---|---|---|
| 92 | 3.75 | 0 | 2.6 |
| | | 1 | 2.7 |
| | | 4 | 2.5 |
| | | 6 | 2.7 |
| | | 8 | 2.7 |
| | | 16 | 2.3 |
| 93 | 5.0 | 0 | 3.0 |
| | | 1 | 3.1 |
| | | 4 | 3.0 |
| | | 6 | 3.1 |

[1]Dimedone added to macroemulsion (wt % based on emulsion blend)

## MULTIMODAL EMULSION BLEND VISCOSITY DATA

Examples 94-111 demonstrate that the instant process for preparing multimodal emulsions can conveniently provide for emulsion blends that display bulk viscosities that are lower than a weighted average of the two parent emulsions.

### Example 94

Blends of the microemulsion of Example 5 containing a quaternary Mannich microemulsion and the low charge cationic macroemulsion of Example 18 were prepared. The blends have a lower viscosity than either the macroemulsion or microemulsion.

TABLE 12

| wt.% microemulsion in blend | Bulk Viscosity (cps)[2] |
|---|---|
| 0[1]* | 1740 |
| 10 | 1040 |
| 20 | 835 |
| 30 | 678 |
| 40 | 581 |
| 50 | 511 |
| 60 | 496 |
| 70 | 564 |
| 80 | 755 |
| 90 | 1090 |
| 100* | 2100 |

[1] (100 wt% macroemulsion)
[2] measured using a Brookfield Viscometer LVT model #2 spindle, 12rpm
* Not representative of the invention of preparing multimodal emulsion blends

**Examples 95-111**

**Blends Viscosity vs. Composition**

A variety of blends of different inverse microemulsions and inverse macroemulsions are prepared. The polymer combinations include cationic/cationic, cationic/anionic and anionic/anionic polymer blends. Table 13 shows examples of these types of blends and the viscosity of the blends measured in centipoise at room temperature using a Brookfield viscometer using a #2 spindle and 12 rpm. The resulting blends are multimodal and advantageous in that they display a viscosity which is lower than that of a weighted average of the two parent inverse emulsions used to prepare the multimodal emulsion blends.

TABLE 13

| | Blend Type | | Weight Percent Microemulsion in the Blend (viscosity - cps) | | | | |
|---|---|---|---|---|---|---|---|
| Ex. | Micro emulsion of Ex. | Macro emulsion of Example | 100%* | 75% | 50% | 25% | 0* (100% macro emulsion) |
| 95 | 9 | 21 | 28 | 55 | 177 | 433 | 960 |
| 96 | 9 | 25 | 28 | 53 | 190 | 461 | 1380 |
| 97 | 9 | 22 | 28 | 65 | 259 | 615 | 4530 |
| 98 | 9 | 23 | 28 | 55 | 242 | 621 | 1650 |
| 99 | 9 | 24 | 28 | 53 | 197 | 504 | 1220 |
| 100 | 10 | 23 | 25 | 68 | 245 | 574 | 1650 |
| 101 | 10 | 21 | 25 | 43 | 98 | 292 | 960 |
| 102 | 10 | 22 | 25 | 70 | 329 | --- | 4530[1] |
| 103 | 11 | 21 | 15 | 45 | 115 | 329 | 960 |
| 104 | 11 | 22 | 15 | 48 | 185 | 486 | 4530 |
| 105 | 12 | 21 | 15 | 60 | 234 | 539 | 960 |
| 106 | 5 | 25 | 2300 | 626 | 417 | 611 | 1380 |
| 107 | 5 | 22 | 2300 | 386 | 361 | 585 | 4530 |
| 108 | 5 | 19 | 2300 | 822 | 628 | 698 | 1100 |
| 109 | 5 | 23 | 2300 | 768 | 523 | 748 | 1650 |
| 110 | 5 | 20 | 2300 | 346 | 372 | 561 | 1070 |
| 111 | 5 | 24 | 2300 | 1010 | 625 | 748 | 1220 |

[1] #3 spindle used

* Not representative of the invention or preparing multimodal emulsion blends

**Example 111A**

**Low Viscosity Emulsion Blend of two microemulsions**

The microemulsion of Example 1 having a volume average droplet diameter of 650 Å, (as measured by transmission electron microscopy) and the microemulsion of Example 5 having a volume average droplet diameter of about 1000 Å are blended together as indicated below. The resulting blend is a multimodal emulsion blend which has a viscosity which is less than that predicted by a weighted average of the starting emulsion viscosities.

TABLE 14

| Blend Composition (wt.%) | | Blend Viscosity [1] (cps) |
|---|---|---|
| Ex. 1 | Ex. 5 | |
| 100 | 0 | 28 |
| 75 | 25 | 45 |
| 50 | 50 | 78 |
| 25 | 75 | 249 |
| 0 | 100 | 1260 |

[1] Brookfield Viscometer, LVT model with UL adapter 12rpm

Examples 112-118 demonstrate the performance utility of various stable multimodal emulsion blends.

**Examples 112-118**

The efficiency of dewatering a typical municipal sludge is determined in Examples 112-118 as follows: 200 gms of sludge are carefully weighed into a beaker. Aqueous solutions of the polymers and blends are prepared by adding the polymer emulsion sample to water so that the polymer concentration is 0.2 weight percent. Various doses of the polymer solution are added to the sludge samples, water is added to bring the total weight to 250 gms, the mixture is agitated at 1000 rpm for 5 seconds and the resulting flocculated sludge is poured through a Buchner funnel containing a 60 mesh screen. The free drainage is measured by recording the volume of filtrate collected in 10 seconds. The resulting flocculated sludge is further dewatered by pressing the sample under identical conditions. The pressed sludge is then dried to constant weight to determine the final sludge solids content, i.e. the cake solids.

As demonstrated by the data in Examples 112-118, the stable multimodal emulsion blends of Examples 114, 115, 116 and 117 exhibited improved flocculation performance compared to single macroemulsions containing polymers of similar charge.

**EXAMPLE 112**

**PERFORMANCE OF 55% CHARGE BLENDS ON TYPICAL MUNICIPAL SLUDGE #2**

TABLE 15

| Blend of Example | Control of Example | Dose(mL) | Filtrate (mL) | Cake Solids (%) |
|---|---|---|---|---|
| 30 | | 10 | 130 | 27.3 |
| | | 12 | 148 | 29.7 |
| | | 14 | 158 | 28.7 |
| | | 16 | 165 | 30.1 |
| | 15* | 10 | 140 | 28.4 |
| | | 12 | 152 | 30.8 |
| | | 14 | 148 | 28.6 |
| | | 16 | 150 | 27.1 |

* Not representative of the invention for preparing multimodal emulsion blends or the invention for stable emulsion blends

**Example 113**

**Performance of 55% Charge Blends on Typical Municipal Sludge #3**

TABLE 16

| Blend Example | Control of Example | Dose (mL) | Filtrate (mL) | Cake Solids (%) |
|---|---|---|---|---|
| 30 | | 16 | 103 | 19.8 |
| | | 18 | 135 | 20.3 |
| | | 19 | 135 | 20.4 |
| | | 20 | 147 | 19.0 |
| | | 22 | 148 | 19.2 |
| 27 | | 16 | 128 | 19.1 |
| | | 18 | 143 | 18.9 |
| | | 20 | 137 | 19.6 |
| 33 | | 18 | 74 | 19.7 |
| | | 22 | 126 | 20.4 |
| | | 24 | 137 | 21.1 |
| | 15* | 16 | 68 | 19.6 |
| | | 18 | 141 | 19.2 |
| | | 20 | 152 | 18.6 |
| | | 22 | 151 | 18.4 |

* Not representative of the invention for preparing multimodal emulsion blends or the invention for stable emulsion blends

**Example 114**

**Performance of 20% Charge Blends on Typical Paper Sludge**

Tested with an agitation 500 rpm for 5 seconds. Filtrate quality is assessed by measuring clarity, in NTU with a Hach turbidimeter.

TABLE 17

| Blend Example | Control of Example | Dose (mL) | Filtrate (mL) | Turbidity (NTU) |
|---|---|---|---|---|
| 44 | | 9 | 106 | 141 |
| | | 12 | 126 | 38 |
| | | 15 | 122 | 76 |
| | | 18 | 124 | 50 |
| 45 | | 9 | 114 | 180 |
| | | 12 | 140 | 44 |
| | | 15 | 142 | 33 |
| | | 18 | 148 | 44 |

TABLE 17 (continued)

| Blend Example | Control of Example | Dose (mL) | Filtrate (mL) | Turbidity (NTU) |
|---|---|---|---|---|
| 46 | | 9 | 118 | 191 |
| | | 12 | 138 | 40 |
| | | 15 | 148 | 30 |
| | | 18 | 138 | 43 |
| 49 | | 9 | 100 | 294 |
| | | 12 | 134 | 54 |
| | | 15 | 148 | 35 |
| | | 18 | 146 | 44 |
| | 13* | 9 | 50 | >500 |
| | | 12 | 102 | 164 |
| | | 15 | 138 | 83 |
| | | 18 | 144 | 47 |

* Not representative of the invention for preparing multimodal emulsion blends or the invention for stable emulsion blends

**Example 115**

**Performance of 55% Charge Blends on Municipal Sludge #4**

TABLE 18

| Blend of Example | Control of Example | Dose (mL) | Filtrate (mL) | Cake Solids (%) |
|---|---|---|---|---|
| 30 | | 12 | 92 | 24 |
| | | 14 | 136 | 22 |
| | | 16 | 150 | 22 |
| | | 18 | 148 | 23 |
| | 15* | 12 | 72 | 24 |
| | | 14 | 104 | 24 |
| | | 16 | 125 | 27 |
| | | 18 | 148 | 23 |

* Not representative of the invention for preparing multimodal emulsion blends or the invention for stable emulsion blends

**Example 116**

**Performance of 55% Charge Blends on Municipal Sludge #5**

TABLE 19

| Blend of Example | Control of Example | Dose (mL) | Filtrate (mL) | Cake Solids (%) |
|---|---|---|---|---|
| 30 | | 18 | 84 | 17 |
| | | 20 | 116 | 16 |
| | | 22 | 127 | 16 |
| | | 24 | 110 | 17 |
| | 15* | 18 | 98 | 16 |
| | | 20 | 108 | 17 |
| | | 22 | 104 | 16 |
| | | 24 | 106 | 17 |

* Not representative of the invention for preparing multimodal emulsion blends or the invention for stable emulsion blends

**Example 117**

**Performance of 20% Charge Blends on Municipal Sludge #6**

TABLE 20

| Blend of Example | Control of Example | Dose (mL) | Filtrate (mL) | Turbidity (NTU) |
|---|---|---|---|---|
| 44 | | 5 | 56 | 765 |
| | | 6 | 74 | 432 |
| | | 7 | 76 | 284 |
| | | 8 | 88 | 183 |
| | | 9 | 88 | 110 |
| | | 10 | 90 | 111 |
| | | 12 | 88 | 98 |
| 45 | | 5 | 50 | >1000 |
| | | 6 | 58 | 678 |
| | | 7 | 56 | 440 |
| | | 8 | 66 | 309 |
| | | 9 | 70 | 256 |
| | | 10 | 84 | 159 |
| | | 12 | 106 | 98 |
| | | 14 | 94 | 112 |

TABLE 20 (continued)

| Blend of Example | Control of Example | Dose (mL) | Filtrate (mL) | Turbidity (NTU) |
|---|---|---|---|---|
| | 13* | 5 | 54 | >1000 |
| | | 6 | 66 | 581 |
| | | 7 | 72 | 363 |
| | | 8 | 88 | 210 |
| | | 9 | 100 | 123 |
| | | 10 | 94 | 83 |
| | | 12 | 100 | 43 |

* Not representative of the invention for preparing multimodal emulsion blends or the invention for stable emulsion blends

**Example 118**

**Preparation And Performance Of Blends**

Blends in Example 110 are prepared by mixing the emulsion of Examples 5 and 20, then stabilized by urea at a level of 1.5-2.0%, and tested using typical sludge #7. Example 110 and 30 blends show effective performance comparable to the emulsions used to prepare the emulsion blend 110.

TABLE 21

| Blend Example | Control of Example | Dose(mL) | Filtrate (mL) | Turbidity (NTU) |
|---|---|---|---|---|
| 110 Micro/Macro = 1/1 g/g | | 8 | 88 | --- |
| | | 10 | 125 | 22 |
| | | 12 | 129 | 22 |
| | | 14 | 120 | --- |
| 110 Micro/Macro = 1/3 g/g | | 8 | 87 | --- |
| | | 10 | 125 | 20 |
| | | 12 | 135 | 22 |
| | | 13 | 124 | 22 |
| | | 14 | 133 | --- |
| 30 | | 8 | 77 | --- |
| | | 10 | 125 | 22 |
| | | 12 | 131 | 23 |
| | | 14 | 129 | 24 |
| | 5* | 8 | 82 | --- |
| | | 10 | 124 | 22 |
| | | 12 | 136 | 22 |
| | | 14 | 121 | 21 |
| | | 16 | 120 | 21 |
| | | 18 | 105 | 20 |

* Not representative of the invention for preparing multimodal emulsion blends or the invention for stable emulsion blends

TABLE 21 (continued)

| Blend Example | Control of Example | Dose(mL) | Filtrate (mL) | Turbidity (NTU) |
|---|---|---|---|---|
| | 20* | 8 | 77 | --- |
| | | 10 | 121 | 21 |
| | | 12 | 132 | 23 |
| | | 14 | 117 | --- |

* Not representative of the invention for preparing multimodal emulsion blends or the invention for stable emulsion blends

The preceding examples can be repeated with similar results by substituting the generically or specifically described reactions and/or operating conditions of this invention for those used in the preceding examples.

## Claims

**1.** A process for preparing a multimodal polymeric emulsion which comprises:

(a) preparing a microemulsion comprising a continuous phase and a water-swellable or water-soluble polymer-containing discontinuous phase in the form of droplets having a volume average droplet diameter;
(b) preparing a second emulsion comprising a continuous phase and a water-swellable or water-soluble polymer-containing discontinuous phase in the form of droplets having a volume average diameter which is greater than the volume average diameter of the droplets in the microemulsion, the polymer in said second emulsion differing from that in said microemulsion; and
(c) admixing said microemulsion from step (a) and said second emulsion from step (b).

**2.** A process according to Claim 1, wherein the volume average droplet diameter of the droplets in said second emulsion is at least 300 Å greater than the volume average droplet diameter of the droplets in said microemulsion.

**3.** A process according to Claim 1 or Claim 2, wherein said polymer in said microemulsion is cationic.

**4.** A process according to any preceding claim, wherein the polymers in the microemulsion and second emulsion are water-soluble.

**5.** A process according to any preceding claim, wherein said polymer in said microemulsion is a dialkyl aminomethyl (alk)acrylamide polymer or quaternary derivative thereof.

**6.** A process according to any preceding claim, wherein the second emulsion is a macroemulsion which contains a copolymer of acrylamide and (meth)acryloyloxyethyltrimethyl ammonium salt.

**7.** A composition comprising a blend of a microemulsion comprising a continuous phase and a water-swellable or water-soluble polymer-containing discontinuous phase in the form of droplets having a volume average droplet diameter; and a second emulsion comprising a continuous phase and a water-swellable or water-soluble polymer-containing discontinuous phase in the form of droplets having a volume average diameter which is greater than the volume average diameter of the droplets in the microemulsion, the polymer in said second emulsion differing from that in said microemulsion.

**8.** A composition according to Claim 7, wherein the volume average droplet diameter of the droplets in said second emulsion is at least 300 Å greater than the volume average droplet diameter of the droplets in said microemulsion.

**9.** A composition according to Claim 7 or Claim 8, wherein the polymers in the microemulsion and second emulsion are water-soluble.

**10.** A composition according to any one of Claims 7-9, wherein said polymer in said microemulsion is cationic.

**11.** A composition according to any one of Claims 7-10, wherein said polymer in said microemulsion is a dialkyl aminomethyl (alk)acrylamide polymer or quaternary derivative thereof.

12. A composition according to any one of Claims 7-11, wherein the polymer in said second emulsion is a cationic polymer containing monomeric units selected from quaternary dialkyl aminomethyl (alk)acrylamides, dialkyl aminomethyl (alk)acrylamides; quaternary dialkylaminoalkyl (meth)acrylates; quaternary dialkylaminoalkyl (meth)acrylamides; dialkylaminoalkyl (meth)acrylates; dialkylaminoalkyl (meth)acrylamides; diallyldialkylammonium halides and copolymers thereof with (alk)acrylamide.

13. A composition comprising a blend of a microemulsion comprising a continuous phase and a water-soluble polymer-containing discontinuous phase in the form of droplets having a volume average droplet diameter; said polymer in said microemulsion being a dialkyl aminomethyl (alk)acrylamide polymer or quaternary derivative thereof which contains from 60 to 90 mole percent cationic functionality; and a macroemulsion comprising a continuous phase and a water-swellable or water-soluble polymer containing discontinuous phase in the form of droplets having a volume average diameter which is at least 300 Å greater than the volume average diameter of the droplets in the microemulsion; said polymer in said macroemulsion being a copolymer of acrylamide and (meth)acryloylethyltrimethylammonium salt which contains from 1 to 20 mole percent cationic functionality.

14. A method of flocculating suspended solids in an aqueous dispersion which comprises adding to said aqueous dispersion a flocculating amount of an emulsion blend as defined in any one of Claims 7-13.

15. A method according to Claim 14, wherein said flocculating amount of emulsion blend is in the form of a dilute aqueous solution prepared by inverting the emulsion blend defined in Claim 14 to form a dilute aqueous solution.

16. A method according to Claim 14, wherein said flocculating amount of emulsion blend is in the form of a dilute aqueous solution prepared by recovering one or more water-swellable or water-soluble polymers from the emulsion blend defined in Claim 14 and adding the recovered polymer to water to form a dilute aqueous solution.

17. A stable composition comprising a blend of first and second inverse emulsions wherein (a) said first emulsion is a microemulsion which contains in its discontinuous phase a functionalized water-swellable or water-soluble polymer and (b) said second emulsion contains a water-swellable or water-soluble (alk)acrylamide-based polymer and an amount of aldehyde scavenger ranging from 0.1 to 10 weight percent, based on total weight of the composition, said functionalized polymer being an (alk)acrylamide-based polymer which contains, generates or is capable of generating a compound capable of reacting with the (alk)acrylamide-based polymer in the emulsion blend.

18. A composition according to Claim 17, wherein said (alk)acrylamide-based polymer is a cationic polymer containing monomeric units selected from quaternary dialkyl aminomethyl(alk)acrylamide; dialkyl aminomethyl (alk)acrylamide; quaternary dialkylaminoalkyl (meth)acrylamides; dialkylaminoalkyl (meth)acrylamide and copolymers of acrylamide or methacrylamide with any of the aforesaid monomeric units or a monomeric unit selected from quaternary dialkylaminoalkyl (meth)acrylates; dialkylaminoalkyl (meth)acrylates and diallyldialkylammonium halides.

19. A composition according to Claim 17 or Claim 18, wherein said functionalized polymer is a dialkyl aminomethyl (alk)acrylamide polymer or quaternary derivative thereof.

20. A composition according to any one of Claims 17-19, wherein the aldehyde scavenger is a formaldehyde scavenger selected from urea, -5,5-dimethyl-1,3-cyclohexanedione sodium metabisulfite and sodium bisulfite.

21. A method of preparing a stable composition comprising a blend of first and second inverse emulsions, which comprises:

(a) preparing a first inverse emulsion which is a microemulsion comprising a water-swellable or water-soluble functionalized polymer;
(b) preparing a second inverse emulsion which is an emulsion comprising a water-swellable or water-soluble (alk)acrylamide-based polymer;
(c) admixing said microemulsion and said second emulsion to form a blend of emulsions; and
(d) adding an amount of aldehyde scavenger compound ranging from 0.1 to 10 weight percent, based on the total weight of the composition, to the microemulsion, to the second emulsion or to the emulsion blend resulting from step (c), said functionalized polymer being an (alk)acrylamide-based polymer which contains, generates or is capable of generating a compound capable of reacting with the (alk)acrylamide-based polymer in the emulsion blend.

**22.** A method of flocculating suspended solids in an aqueous dispersion which comprises:
adding to said aqueous dispersion a flocculating amount of a stable composition as defined in any one of Claims 17-20.

**23.** A method according to Claim 22, wherein said flocculating amount of stable composition is in the form of a dilute aqueous solution prepared by inverting the stable composition defined in Claim 22 to form a dilute aqueous solution.

**24.** A method according to Claim 22, wherein said flocculating amount of stable composition is in the form of a dilute aqueous solution prepared by recovering one or more water-swellable or water-soluble polymers from the stable composition defined in Claim 22 and adding the recovered polymer to water to form a dilute aqueous solution.

## Patentansprüche

**1.** Verfahren zur Herstellung einer multimodalen polymeren Emulsion, umfassend:

(a) das Herstellen einer Mikroemulsion, umfassend eine kontinuierliche Phase und eine wasseranschwellbare oder wasserlösliche, polymerhaltige diskontinuierliche Phase in Form von Tröpfchen mit einem Volumendurchschnittströpfchendurchmesser;
(b) das Herstellen einer zweiten Emulsion, umfassend eine kontinuierliche Phase und eine wasserquellbare oder wasserlösliche, polymerhaltige diskontinuierliche Phase in Form von Tröpfchen mit einem Volumendurchschnittsdurchmesser, der größer ist als der Volumendurchschnittsdurchmesser der Tröpfchen in der Mikroemulsion, wobei sich das Polymer in der zweiten Emulsion von jenem in der Mikroemulsion unterscheidet; und
(c) das Zusammenmischen der Mikroemulsion aus Schritt (a) und der zweiten Emulsion aus Schritt (b).

**2.** Verfahren nach Anspruch 1, wobei der Volumendurchschnittströpfchendurchmesser der Tröpfchen in der zweiten Emulsion um mindestens 300 Å größer ist als der Volumendurchschnittströpfchendurchmesser der Tröpfchen in der Mikroemulsion.

**3.** Verfahren nach Anspruch 1 oder 2, wobei das Polymer in der Mikroemulsion kationisch ist.

**4.** Verfahren nach einem der vorhergehenden Ansprüche, wobei die Polymere in der Mikroemulsion und in der zweiten Emulsion wasserlöslich sind.

**5.** Verfahren nach einem der vorhergehenden Ansprüche, wobei es sich bei dem Polymer in der Mikroemulsion um ein Dialkylaminomethyl-(alk)acrylamidpolymer oder ein quartäres Derivat davon handelt.

**6.** Verfahren nach einem der vorhergehenden Ansprüche, wobei es sich bei der zweiten Emulsion um eine Makroemulsion handelt, die ein Copolymer aus Acrylamid und (Meth)acryloyloxyethyltrimethylammoniumsalz enthält.

**7.** Zusammensetzung, umfassend eine Mischung aus einer Mikroemulsion, die eine kontinuierliche Phase und eine wasserquellbare oder wasserlösliche, polymerhaltige diskontinuierliche Phase in Form von Tröpfchen mit einem Volumendurchschnittströpfchendurchmesser umfaßt; und einer zweiten Emulsion, die eine kontinuierliche Phase und eine wasserquellbare oder wasserlösliche, polymerhältige diskontinuierliche Phase in Form von Tröpfchen mit einem Volumendurchschnittsdurchmesser umfaßt, der größer ist als der Volumendurchschnittsdurchmesser der Tröpfchen in der Mikroemulsion, wobei sich das Polymer in der zweiten Emulsion von jenem in der Mikroemulsion unterscheidet.

**8.** Zusammensetzung nach Anspruch 7, wobei der Volumendurchschnittströpfchendurchmesser der Tröpfchen in der zweiten Emulsion um mindestens 300 Å größer ist als der Volumendurchschnittströpfchendurchmesser der Tröpfchen in der Mikroemulsion.

**9.** Zusammensetzung nach Anspruch 7 oder Anspruch 8, wobei die Polymere in der Mikroemulsion und der zweiten Emulsion wasserlöslich sind.

**10.** Zusammensetzung nach einem der Ansprüche 7-9, wobei das Polymer in der Mikroemulsion kationisch ist.

**11.** Zusammensetzung nach einem der Ansprüche 7-10, wobei es sich bei dem Polymer in der Mikroemulsion um ein

Dialkylaminomethyl-(alk)acrylamidpolymer oder ein quartäres Derivat davon handelt.

**12.** Zusammensetzung nach einem der Ansprüche 7-11, wobei es sich bei dem Polymer in der zweiten Emulsion um ein kationisches Polymer handelt, das monomere Einheiten enthält, die aus quartären Dialkylaminomethyl-(alk) acrylamiden, Dialkylaminomethyl-(alk)acrylamiden; quartären Dialkylaminoalkyl-(Meth)acrylaten; quartären Dialkylaminoalkyl-(Meth)acrylamiden; Dialkylaminoalkyl-(Meth)acrylaten; Dialkylaminoalkyl-(Meth)acrylamiden; Diallyldialkylammoniumhaliden und Copolymeren davon mit (Alk)acrylamid ausgewählt werden.

**13.** Zusammensetzung, umfassend eine Mischung aus einer Mikroemulsion, die eine kontinuierliche Phase und eine wasserlösliche, polymerhaltige diskontinuierliche Phase in Form von Tröpfchen mit einem Volumendurchschnittströpfchendurchmesser umfaßt; wobei es sich bei dem Polymer in der Mikroemulsion um ein Dialkylaminomethyl(alk)acrylamidpolymer oder ein quartäres Derivat davon handelt, das von 60 bis 90 Molprozent kationischer Funktionalität enthält; und einer Makroemulsion, die eine kontinuierliche Phase und eine wasserquellbare oder wasserlösliche, polymerhaltige diskontinuierliche Phase in Form von Tröpfchen mit einem Volumendurchschnittsdurchmesser, der um mindestens 300 Å größer ist als der Volumendurchschnittsdurchmesser der Tröpfchen in der Mikroemulsion, umfaßt; wobei es sich bei dem Polymer in der Makroemulsion um ein Copolymer aus Acrylamid und (Meth) acryloylethyltrimethylammoniumsalz handelt, das von 1 bis 20 Molprozent kationischer Funktionalität enthält.

**14.** Verfahren zur Ausflockung schwebender Feststoffe in einer wässrigen Dispersion, welches das Hinzufügen einer ausflockenden Menge einer Emulsionsmischung zur wässrigen Dispersion umfaßt, wie sie in einem der Ansprüche 7-13 definiert ist.

**15.** Verfahren nach Anspruch 14, wobei die ausflockende Menge an Emulsionsmischung die Form einer verdünnten wässrigen Lösung aufweist, die durch Invertieren der Emulsionsmischung, wie sie in Anspruch 14 definiert ist, hergestellt wird, um eine verdünnte wässrige Lösung zu bilden.

**16.** Verfahren nach Anspruch 14, wobei die ausflockende Menge an Emulsionsmischung die Form einer verdünnten wässrigen Lösung aufweist, die durch Wiedergewinnung eines oder mehrerer wasserquellbaren oder wasserlöslichen Polymere aus der in Anspruch 14 definierten Emulsionsmischung und Hinzufügen des wiedergewonnenen Polymers zum Wasser hergestellt wird, um eine verdünnte wässrige Lösung zu bilden.

**17.** Stabile Zusammensetzung, umfassend eine Mischung aus einer ersten und einer zweiten inversen Emulsion, wobei (a) es sich bei der ersten Emulsion um eine Mikroemulsion handelt, die in ihrer diskontinuierlichen Phase ein funktionalisiertes wasserquellbares oder wasserlösliches Polymer enthält und (b) die zweite Emulsion ein wasserquellbares oder wasserlösliches Polymer auf (Alk)acrylamidbasis und eine Menge an Aldehydfänger enthält, die, basierend auf dem Gesamtgewicht der Zusammensetzung, 0,1 und 10 Gewichtsprozent beträgt, wobei es sich bei dem funktionalisierten Polymer um ein Polymer auf (Alk)acrylamidbasis handelt, das eine Verbindung enthält, erzeugt oder erzeugen kann, die in der Lage ist, mit dem Polymer auf (Alk)acrylamidbasis in der Emulsionsmischung zu reagieren.

**18.** Zusammensetzung nach Anspruch 17, wobei es sich bei dem Polymer auf (Alk)acrylamidbasis um ein kationisches Polymer handelt, das monomere Einheiten enthält, die ausgewählt werden aus quartärem Dialkylaminomethyl (alk)acrylamid; Dialkylaminomethyl-(alk)acrylamid; quartärem Dialkylaminoalkyl-(meth)acrylamiden; Dialkylaminoalkyl-(meth)acrylamid und Copolymeren von Acrylamid oder Methacrylamid mit einer beliebigen der zuvor erwähnten monomeren Einheiten oder einer monomeren Einheit, ausgewählt aus quartären Dialkylaminoalkyl(meth) acrylaten; Dialkylaminoalkyl-(meth)acrylaten und Diallyldialkylammoniumhaliden.

**19.** Zusammensetzung nach Anspruch 17 oder 18, wobei es sich bei dem funktionalisierten Polymer um ein Dialkylaminomethyl-(alk)acrylamidpolymer oder ein quartäres Derivat davon handelt.

**20.** Zusammensetzung nach einem der Ansprüche 17-19, wobei es sich bei dem Aldehydfänger um einen Formaldehydfänger handelt, der aus Harnstoff, -5,5-dimethyl-1,3-cyclohexandionnatriummetabisulfit und Natriumbisulfit ausgewählt wird.

**21.** Verfahren zur Herstellung einer stabilen Zusammensetzung, umfassend eine Mischung aus einer ersten und einer zweiten inversen Emulsion, welches umfaßt:

(a) das Herstellen einer ersten inversen Emulsion, bei der es sich um eine Mikroemulsion handelt, die ein wasserquellbares oder wasserlösliches funktionalisiertes Polymer umfaßt;
(b) das Herstellen einer zweiten inversen Emulsion, bei der es sich um eine Emulsion handelt, die ein wasserquellbares oder wasserlösliches Polymer auf (Alk)acrylamidbasis umfaßt;
(c) das Zusammenmischen der Mikroemulsion und der zweiten Emulsion zur Bildung einer Mischung aus den Emulsionen; und
(d) das Hinzufügen einer Menge einer Aldehydfängerverbindung im Bereich von 0,1 bis 10 Gewichtsprozent, basierend auf dem Gesamtgewicht der Verbindung, zur Mikroemulsion, zur zweiten Emulsion oder zur Emulsionsmischung, die sich aus Schritt (c) ergeben hat, wobei es sich bei dem funktionalisierten Polymer um ein Polymer auf (Alk)acrylamidbasis handelt, das eine Mischung enthält, erzeugt oder zu erzeugen in der Lage ist, die mit dem Polymer auf (Alk)acrylamidbasis in der Emulsionsmischung reagieren kann.

**22.** Verfahren zum Ausflocken schwebender Feststoffe in einer wässrigen Dispersion, umfassend:
das Hinzufügen einer ausflockenden Menge einer Emulsionsmischung einer stabilen Zusammensetzung zur wässrigen Dispersion, wie sie in einem der Ansprüche 17-20 definiert ist.

**23.** Verfahren nach Anspruch 22, wobei die ausflockende Menge der stabilen Mischung die Form einer verdünnten wässrigen Lösung aufweist, die durch Invertieren der stabilen Mischung, wie sie in Anspruch 22 definiert ist, hergestellt wird, um eine verdünnte wässrige Lösung zu bilden.

**24.** Verfahren nach Anspruch 22, wobei die ausflockende Menge stabiler Mischung die Form einer verdünnten wässrigen Lösung aufweist, die durch Wiedergewinnung eines oder mehrerer wasserquellbaren oder wasserlöslichen Polymere aus der in Anspruch 22 definierten stabilen Mischung und Hinzufügen des wiedergewonnenen Polymers zum Wasser hergestellt wird, um eine verdünnte wässrige Lösung zu bilden.

## Revendications

**1.** Procédé pour préparer une émulsion polymère multimodale qui comprend;

(a) la préparation d'une microémulsion comprenant une phase continue et une phase discontinue contenant un polymère, gonflable à l'eau ou soluble dans l'eau, sous forme de gouttelettes ayant un diamètre volumique moyen de gouttelette;
(b) préparer une deuxième émulsion comprenant une phase continue et une phase discontinue contenant un polymère, gonflable à l'eau ou soluble dans l'eau, sous forme de gouttelettes ayant un diamètre volumique moyen qui est supérieur au diamètre volumique moyen des gouttelettes dans la microémulsion, le polymère dans ladite deuxième émulsion étant différent du polymère dans ladite microémulsion; et
(c) mélanger ladite microémulsion de l'étape (a) et ladite deuxième émulsion de l'étape (b).

**2.** Procédé selon la revendication 1, dans lequel le diamètre volumique moyen des gouttelettes dans ladite deuxième émulsion est supérieur d'au moins 300 Å au diamètre volumique moyen des gouttelettes dans ladite microémulsion.

**3.** Procédé selon la revendication 1 ou la revendication 2, dans lequel ledit polymère dans ladite microémulsion est cationique.

**4.** Procédé selon l'une quelconque des revendications précédentes, dans lequel les polymères dans la microémulsion et dans la deuxième émulsion sont solubles dans l'eau.

**5.** Procédé selon l'une quelconque des revendications précédentes, dans lequel ledit polymère dans ladite microémulsion est un polymère dialkylaminométhyl(alk)acrylamide ou un de ses dérivés quaternaires.

**6.** Procédé selon l'une quelconque des revendications précédentes, dans lequel la deuxième émulsion est une macroémulsion qui contient un copolymère d'acrylamide et un sel de (méth)acryloyloxyéthyltriméthylammonium.

**7.** Composition comprenant un mélange d'une microémulsion comprenant une phase continue et une phase discontinue contenant un polymère, gonflable à l'eau ou soluble dans l'eau, sous forme de gouttelettes ayant un diamètre volumique moyen de gouttelette; et d'une deuxième émulsion comprenant une phase continue et une phase discontinue contenant un polymère, gonflable à l'eau ou soluble dans l'eau, sous forme de gouttelettes, ayant un

diamètre volumique moyen qui est supérieur au diamètre volumique moyen des gouttelettes dans la microémulsion, le polymère dans ladite deuxième émulsion étant différent du polymère dans ladite microémulsion.

**8.** Composition selon la revendication 7, dans laquelle le diamètre volumique moyen des gouttelettes dans ladite deuxième émulsion est supérieur d'au moins 300 Å au diamètre volumique moyen des gouttelettes dans ladite microémulsion.

**9.** Composition selon la revendication 7 ou la revendication 8, dans laquelle les polymères dans la microémulsion et dans la deuxième émulsion sont solubles dans l'eau.

**10.** Composition selon l'une quelconque des revendications 7-9, dans laquelle ledit polymère dans ladite microémulsion est cationique.

**11.** Composition selon l'une quelconque des revendications 7-10, dans laquelle ledit polymère dans ladite microémulsion est un polymère de dialkylaminométhyl(alk)acrylamide ou un de ses dérivés quaternaires.

**12.** Composition selon l'une quelconque des revendications 7-11, dans laquelle le polymère dans ladite deuxième émulsion est un polymère cationique contenant des motifs monomères choisis parmi les dialkylaminométhyl(alk) acrylamides quaternaires, les dialkylaminométhyl(alk)acrylamides, les (méth)acrylates de dialkylaminoalkyle quaternaires, les dialkylaminoalkyl(méth)acrylamides quaternaires, les (méth)acrylates de dialkylaminoalkyle, les dialkylaminoalkyl(méth)acrylamides, les halogénures de diallyldialkylammonium et leurs copolymères avec un (alk)acrylamide.

**13.** Composition comprenant un mélange d'une microémulsion comprenant une phase continue et une phase discontinue contenant un polymère soluble dans l'eau sous forme de gouttelettes ayant un diamètre volumique moyen de gouttelette; ledit polymère dans ladite microémulsion étant un polymère de dialkylaminométhyl(alk)acrylamide ou un de ses dérivés quaternaires qui contient de 60 à 90 pour cent en mole de fonctionnalité cationique; et d'une macroémulsion comprenant une phase continue et une phase discontinue contenant un polymère, gonflable à l'eau ou soluble dans l'eau, sous forme de gouttelettes ayant un diamètre volumique moyen qui est supérieur d'au moins 300 Å au diamètre volumique moyen des gouttelettes dans la microémulsion; ledit polymère dans ladite macroémulsion étant un copolymère d'acrylamide et de sel de (méth)acryloyléthyltriméthylammonium qui contient de 1 à 20 pour cent en mole de fonctionnalité cationique.

**14.** Procédé pour floculer des solides en suspension dans une dispersion aqueuse, qui comprend l'addition à ladite dispersion aqueuse d'une quantité floculante d'un mélange d'émulsions tel que défini dans l'une quelconque des revendications 7-13.

**15.** Procédé selon la revendication 14, dans lequel ladite quantité floculante de mélange d'émulsions est sous la forme d'une solution aqueuse diluée préparée par inversion du mélange d'émulsions défini dans la revendication 14 pour former une solution aqueuse diluée.

**16.** Procédé selon la revendication 14, dans lequel ladite quantité floculante de mélange d'émulsions est sous la forme d'une solution aqueuse diluée préparée par récupération d'un ou de plusieurs polymères gonflables à l'eau ou solubles dans l'eau du mélange d'émulsions défini dans la revendication 14 et addition du polymère récupéré à de l'eau pour former une solution aqueuse diluée.

**17.** Composition stable comprenant un mélange de première et deuxième émulsions inverses dans lequel (a) ladite première émulsion est une microémulsion qui contient, dans sa phase discontinue, un polymère fonctionnalisé gonflable à l'eau ou soluble dans l'eau et (b) ladite deuxième émulsion contient un polymère à base d'(alk)acrylamide gonflable à l'eau ou soluble dans l'eau et une quantité d'épurateur d'aldéhyde allant de 0,1 à 10 pour cent en poids, par rapport au poids total de la composition, ledit polymère fonctionnalisé étant un polymère à base d' (alk)acrylamide qui contient, produit ou est capable de produire un composé capable de réagir avec le polymère à base d'(alk)aciylamide dans le mélange d'émulsions.

**18.** Composition selon la revendication 17, dans laquelle ledit polymère à base d'(alk)acrylamide est un polymère cationique contenant des motifs monomères choisis parmi un dialkylaminométhyl(alk)acrylamide quaternaire, un dialkylaminométhyl(alk)acrylamide, un dialkylaminoalkyl(méth)acrylamide quaternaire, un dialkylaminoalkyl (méth)acrylamide et les copolymères d'acrylamide ou de méthacrylamide avec n'importe lequel des motifs monomères cités ci-dessus ou un motif monomère choisi parmi les (méth)acrylates de dialkylaminoalkyle quaternaires, les (méth)acrylates de dialkylaminoalkyle et les halogénures de diallyldialkylammonium.

**19.** Composition selon la revendication 17 ou la revendication 18, dans laquelle ledit polymère fonctionnalisé est un polymère de dialkylaminométhyl(alk)acrylamide ou un de ses dérivés quaternaires.

**20.** Composition selon l'une quelconque des revendications 17-19, dans laquelle l'épurateur d'aldéhyde est un épurateur d'aldéhyde choisi parmi l'urée, la 5,5-diméthyl-1,3-cyclohexanedione, le métabisulfite de sodium et le bisulfite de sodium.

**21.** Procédé pour préparer une composition stable comprenant un mélange de première et deuxième émulsions inverses, qui comprend les étapes consistant à:

(a) préparer une première émulsion inverse qui est une microémulsion comprenant un polymère fonctionnalisé gonflable à l'eau ou soluble dans l'eau;
(b) préparer une deuxième émulsion inverse qui est une émulsion comprenant un polymère à base d'(alk) acrylamide gonflable à l'eau ou soluble dans l'eau;
(c) mélanger ladite microémulsion et ladite deuxième émulsion pour former un mélange d'émulsions; et
(d) ajouter à la microémulsion, à la deuxième émulsion ou au mélange d'émulsions résultant de l'étape (c) une quantité de composé épurateur d'aldéhyde allant de 0,1 à 10 pour cent en poids, par rapport au poids total de la composition, ledit polymère fonctionnalisé étant un polymère à base d'(alk)acrylamide qui contient, produit ou est capable de produire un composé capable de réagir avec le polymère à base d'(alk)acrylamide dans le mélange d'émulsions.

**22.** Procédé pour floculer des solides en suspension dans une dispersion aqueuse, qui comprend:
l'addition à ladite dispersion aqueuse d'une quantité floculante d'une composition stable telle que définie dans l'une quelconque des revendications 17-20.

**23.** Procédé selon la revendication 22, dans lequel ladite quantité floculante de composition stable est sous la forme d'une solution aqueuse diluée préparée par inversion de la composition stable définie dans la revendication 22 pour former une solution aqueuse diluée.

**24.** Procédé selon la revendication 22, dans lequel ladite quantité floculante de composition stable est sous la forme d'une solution aqueuse diluée préparée par récupération d'un ou de plusieurs polymères gonflables à l'eau ou solubles dans l'eau de la composition stable définie dans la revendication 22 et addition du polymère récupéré à de l'eau pour former une solution aqueuse diluée.